# EUROPÄISCHE PATENTSCHRIFT

(11) **EP 4 067 858 B1**
(45) Veröffentlichungstag und Bekanntmachung des Hinweises auf die Patenterteilung: **09.10.2024**
(21) Anmeldenummer: 21166751.4
(22) Anmeldetag: 01.04.2021
(51) Int. Cl.: G01N 1/08

(54) **PROBENEHMER FÜR EINE ENTNAHME EINER PROBE EINES PRODUKTES AUS EINEM FLEXIBLEN BEHÄLTNIS**
SAMPLING DEVICE FOR TAKING A SAMPLE OF A PRODUCT FROM A FLEXIBLE CONTAINER
DISPOSITIF D'ÉCHANTILLONAGE POUR UN PRÉLÈVEMENT D'UN ÉCHANTILLON D'UN PRODUIT D'UN RÉCIPIENT FLEXIBLE

(43) Veröffentlichungstag der Anmeldung: 05.10.2022
(73) Patentinhaber: Hecht Technologie GmbH, 85276 Pfaffenhofen (DE)
(72) Erfinder: SCHWAIGER, Thomas, 85276 Pfaffenhofen/llm (DE); PILSNER, Florian, 85276 Pfaffenhofen/llm (DE); HAUSSMANN, Matthias, 85276 Pfaffenhofen/llm (DE)
(74) Vertreter: Kilian Kilian & Partner mbB

(56) Entgegenhaltungen:
- CN-U- 212 513 699
- GB-A- 1 154 184
- JP-B2- 6 785 709
- JP-U- S5 184 946
- KR-B1- 101 736 371

## Beschreibung

Die Erfindung betrifft einen Probenehmer, insbesondere einen manuell zu betätigenden Probenehmer, zur Entnahme einer Probe eines Produkts, insbesondere eines Schüttgutes, aus einem Behältnis, insbesondere aus einem Sack.

Probenehmer sind aus dem Stand der Technik allgemein bekannt und werden beispielsweise bei der Qualitätsprüfung gelieferter Schüttgüter in Unternehmen eingesetzt.

Beispielsweise zeigt das Patentdokument WO 96/29587 A1 einen Probenehmer, der einen röhrenförmigen, spitz zulaufenden Probesammler aufweist.

Der bekannte Probenehmer beinhaltet einen Sockel und einen sackförmigen Probeaufnahmeraum, in dem der Probesammler aufgenommen ist. Eine Klebefolie überspannt und verschließt einen in dem Sockel gebildeten Durchgang, sodass der Probesammler vollständig eingeschlossen ist.

Der Anwender befestigt vor Probeentnahme den Sockel über die Klebefolie an einem Behälter, aus dem die Probe zu entnehmen ist.

Anschließend ergreift der Anwender den sackförmigen Probeaufnahmeraum und durchstößt mit dem eingeschlossenen Probesammler die Klebefolie sowie die Außenoberfläche des Behälters. Eine Probe des in dem Behälter vorhandenen Produktes fällt sodann in den Probesammler und wird hiernach zusammen mit dem Probesammler durch den Anwender zurück in den Probeaufnahmeraum gezogen.

Der Anwender durchtrennt letztendlich den sackförmigen Probeaufnahmeraum zwischen dem Sockel und dem Probesammler, damit zum einen der Behälter verschlossen zurückbleibt und zum anderen die eingeschlossene Probe frei handhabbar wird.

Der Probesammler des bekannten Probenehmers ist zum einen scharf ausgebildet und zum anderen in dem Probeaufnahmeraum völlig freiliegend, sodass die Gefahr besteht, dass das spitz zulaufende bzw. scharfe Ende des Probesammlers bereits vor der beabsichtigten Probeentnahme den Probeaufnahmeraum und/oder die Klebefolie beschädigt, wodurch der Probenehmer unbrauchbar wird.

Die JP 6 785709 B2 definiert einen Probenehmer gemäß dem Oberbegriff des Patentanspruchs 1. Weiterer Stand der Technik findet sich in den Dokumenten GB 1 154 184 A, KR 101 736 371 B1, CN 212 513 699 U und JP S51 84946 U gebildet.

Vor diesem Hintergrund ist es Aufgabe der vorliegenden Erfindung, einen leicht handhabbaren Probenehmer zu schaffen.

Diese Aufgabe wird mit einem Probenehmer gemäß Patentanspruch 1 gelöst. Bevorzugte Ausführungsformen sind Gegenstand der Unteransprüche.

*Der erfindungsgemäße Probenehmer für eine Entnahme einer Probe eines Produktes aus einem flexiblen Behältnis beinhaltet Folgendes:*
*einen Befestigungsabschnitt, der bestimmungsgemäß auf einer Außenoberfläche des Behältnisses befestigt wird und einen Durchgang definiert;*
*einen Probeaufnahmeraum, der zumindest nach Befestigung des Befestigungsabschnittes an dem Behältnis gegenüber einer Außenumgebung verschlossen ist und in dem ein Probeentnahmeelement aufgenommen ist, wobei*
*der Probenehmer derart ausgebildet ist, dass nach Befestigung des Befestigungsabschnittes an dem Behältnis das Probeentnahmeelement durch den Durchgang hindurch geführt werden kann, sodass ein der Außenoberfläche zugewandter Endabschnitt des Probeentnahmeelementes die Außenoberfläche des Behältnisses zur Entnahme der Probe durchstößt, und*
*ein Schutzelement, das den Endabschnitt des Probeentnahmeelements zumindest teilweise abdeckt, um eine ungewollte Beschädigung der Außenoberfläche und*/*oder des Probenehmers zu verhindern, wobei das Schutzelement an dem Probeentnahmeelement derart verstellbar und*/*oder von diesem lösbar ist, dass der Endabschnitt für das Durchstoßen der Außenoberfläche freiliegt.*

Der erfindungsgemäße Probenehmer ist insbesondere ein durch einen Anwender manuell zu betätigender Probenehmer, kann aber auch ein automatisiert betätigter Probenehmer sein, der beispielsweise durch eine Robotervorrichtung betätigt wird.

Das Probeentnahmeelement ist beispielsweise ein lanzenförmiger Probesammler mit einer oder mehreren Öffnungen, in die die Probe fallen kann.

Die Behältnisse, aus denen eine Probe mit dem erfindungsgemä-βen Probenehmer zu entnehmen ist, sind beispielsweise aus Kunststoff, Papier oder Textilien gebildet und beinhalten fließfähige Schüttgüter, wie zum Beispiel Pulver oder Granulate.

Der Endabschnitt des Probeentnahmeelements ist beispielsweise scharf und/oder spitz ausgebildet, um das Durchstoßen der Außenoberfläche des Behältnisses zu erleichtern.

Das Schutzelement deckt den Endabschnitt zumindest teilweise ab und verhindert damit die ungewollte Beschädigung der Außenoberfläche. Das Schutzelement ist beispielsweise eine Kappe, die auf den Endabschnitt gesteckt ist und manuell gelöst werden kann. Alternativ und besonders bevorzugt ist das Schutzelement röhrenförmig ausgebildet und lässt sich bevorzugt gleitend entlang des Probeentnahmeelements versetzen/verstellen.

Das Schutzelement ist bevorzugt an dem Probeentnahmeelement arretiert, beispielsweise durch einen Bajonettverschluss.

*Der Probeaufnahmeraum des erfindungsgemäßen Probenehmers ist durch eine flexible Folie gebildet, die einerseits an dem Befestigungsabschnitt befestigt ist und andererseits mittelbar oder unmittelbar verschlossen ist, wobei*
*die flexible Folie, nachdem der Befestigungsabschnitt an der Außenoberfläche des Behältnisses befestigt ist, das Lösen*/*Verstellen des Schutzelementes für das Führen des Probeentnahmeelementes durch den Durchgang hindurch und das Durchstoßen der Außenoberfläche zulässt.*

Die den Probeaufnahmeraum festlegende flexible Folie kann beispielsweise eine durchsichtige Kunststofffolie sein, die sich durch eine Hand des Anwenders verformen lässt. Alternativen sind nicht durchsichtige Kunststofffolien oder auch Metallfolien, die flexible sind, d. h. manuell verformbar sind.

Die den Probeaufnahmeraum festlegende Folie kann an dem Befestigungsabschnitt durch eine Verschweißung, Verklebung oder Klemmung befestigt sein. Gleiches gilt für die Befestigung der Folie an einem Griff, wobei diesbezüglich auch die Möglichkeit besteht, dass die den Probeaufnahmeraum festlegende Folie das Probeentnahmeelement vollständig einschließt.

*Bevorzugt lässt die flexible Folie das Lösen*/*Verstellen des Schutzelementes zu, indem ein Anwender das Schutzelement mittelbar über die flexible Folie greift und das Probeentnahmeelement relativ zu dem Schutzelement bewegt.*

*Bevorzugt weist der Befestigungsabschnitt des Probenehmers ein ringförmiges den Durchgang definierendes Anschlusselement auf, das so ausgebildet ist, dass, wenn das Probeentnahmeelement durch den Durchgang hindurch geführt wird, das Schutzelement sich an dem Anschlusselement derart abstützt, dass es sich durch das Führen des Probeentnahmeelementes löst*/*verstellt.*

Diese Ausgestaltung ist dahingehend positiv, dass sich das Schutzelement - nach ggf. Lösen der Arretierung - mit Bewegung des Probeentnahmeelements bzw. mit Durchstoßen der Außenoberfläche versetzt/verstellt und der Anwender keinen gesonderten manuellen Schritt durchführen muss, um das Schutzelement zu versetzen/zu lösen.

*Das Probeentnahmeelement ist bevorzugt ein lanzenförmiger Probesammler, der zur Entnahme der Probe bestimmungsgemäß in Richtung seiner Längserstreckung durch den Durchgang hindurch geführt wird, und*
*das Schutzelement ist an dem lanzenförmigen Probesammler bevorzugt derart vorgesehen, dass es sich an dem Anschlusselement abstützt und in der Längsrichtung gleitend verstellt, wenn der Probesammler durch den Durchgang hindurch geführt wird.*

Das Schutzelement ist bevorzugt passgenau für den Durchgang ausgebildet. In dem Durchgang ist bevorzugt ein radialer Vorsprung ausgebildet, an dem sich das Schutzelement abstützt bzw. mit dem das Schutzelement in Anschlag kommt, wenn der Probesammler in den Durchgang eingeführt wird, um die Außenoberfläche zu durchstoßen.

*Weiterhin bevorzugt ist das Probeentnahmeelement ein*/*der lanzenförmige(r) Probesammler, der zur Entnahme der Probe bestimmungsgemäß in Richtung seiner Längserstreckung durch den Durchgang hindurch geführt wird und in dem mindestens eine Öffnung quer zu der Längserstreckung gebildet ist, durch die hindurch die Probe nach Durchstoßen der Außenoberfläche fällt und sich in einem Hohlraum des Probesammlers sammelt, wobei*
*das Schutzelement an dem lanzenförmigen Probesammler derart vorgesehen ist, dass* es *mit oder nach Zurückziehen des Probesammlers in den Probeaufnahmeraum die Öffnung verschließt.*

Insoweit dient das Schutzelement in dieser bevorzugten Ausgestaltung nicht nur dazu den Endabschnitt zu schützen, sondern bildet auch einen Verschluss der Öffnung in den Hohlraum des Probesammlers, der verhindert, dass die Probe innerhalb des Probeaufnahmeraums wieder herausfallen kann.

*Bevorzugt ist die flexible Folie des erfindungsgemäßen Probenehmers derart ausgestaltet und dimensioniert, dass sie in einem Zustand, in dem sich das Probeentnahmeelement zusammen mit der Probe nach der Probeentnahme in dem Probeaufnahmeraum befindet, zusammengeschnürt ist und durchtrennt werden kann, derart, dass der Befestigungsabschnitt, durch einen Rest der durchtrennten Folie verschlossen, an dem Behältnis verbleibt, und das Probeentnahmeelement zusammen mit der Probe, durch einen weiteren Rest der durchtrennten Folie eingeschlossen, frei handhabbar ist.*

*Der Durchgang des erfindungsgemäßen Probenehmers ist bevorzugt durch eine Verschließfolie verschlossen, derart, dass das Probeentnahmeelement bereits vor dem Befestigen des Befestigungsabschnittes an dem Behältnis in dem Probeaufnahmeraum vollständig eingeschlossen ist, und das Probeentnahmeelement bei der Probeentnahme derart geführt wird, dass* es *die Verschließfolie und die Außenoberfläche des Behältnisses durchstößt.*

Diese Ausgestaltung des erfindungsgemäßen Probenehmers ermöglicht eine sehr gute Kontaminationsvermeidung, weil das Probeentnahmeelement bereits vor Befestigung des Probenehmers vollständig in dem Probeaufnahmeraum eingeschlossen ist und nicht kontaminiert werden kann.

Die Verschließfolie kann verstärkende Strukturen, wie beispielsweise Maschenstrukturen, aufweisen.

*Bevorzugt beinhaltet der Befestigungsabschnitt des erfindungsgemäßen Probenehmers das ringförmige den Durchgang definierende Anschlusselement mit einem der Außenoberfläche zugewandten Flanschabschnitt, wobei die Verschließfolie an dem Flanschabschnitt derart befestigt ist, dass sie den Durchgang überspannt.*

*Die Verschließfolie weist bevorzugt auf einer der Außenoberfläche zugewandten Seite eine Klebstoffschicht auf, wobei die Verschließfolie bei Befestigung des Probenehmers durch das ringförmige Anschlusselement des Befestigungsabschnitts an der Außenoberfläche anliegt und durch die Klebstoffschicht auf der Außenoberfläche haftet.*

Der Klebstoff kann beliebig sein, beispielsweise ein Haftklebstoff, ein thermischer Klebstoff oder ein durch UV-Strahlung auszuhärtender Klebstoff.

*Bevorzugt ist die Klebstoffschicht auf der der Außenoberfläche zugewandten Seite der Verschließfolie in einem Bereich, der sich auf dem Flanschabschnitt befindet, und in einem weiteren Bereich, der den Durchgang überspannt, gebildet, derart, dass nach Befestigung des Befestigungsabschnittes der gesamte weitere Bereich, der den Durchgang überspannt, an der Außenoberfläche haftet und der Bereich, der sich auf dem Flanschabschnitt befindet, zumindest abschnittsweise, bevorzugt insgesamt, an der Außenoberfläche haftet.*

Die Tatsache, dass die Außenoberfläche des Behältnis und die Verschließfolie in dem gesamten Bereich des Durchgangs aneinander haften, hat den Vorteil, dass Partikel, die bereits vor Befestigung des Probenehmers auf der Außenoberfläche in diesem Bereich vorhanden waren, nicht in das Behältnis eindringen können, weil sie in der Klebstoffschicht eingeschlossen sind bzw. an dieser haften,

*Bevorzugt steht die Verschließfolie des erfindungsgemäßen Probenehmers in Bezug auf eine Achse des Durchgangs mit einem überstehenden Abschnitt radial nach außen über den Flanschabschnitt über, und die Klebstoffschicht ist bevorzugt auf der der Außenoberfläche zugewandten Seite des überstehenden Abschnitts gebildet, derart, dass nach Befestigung des Befestigungsabschnittes zumindest der überstehende Abschnitt abschnittsweise, bevorzugt insgesamt, an der Außenoberfläche haftet.*

*Der Befestigungsabschnitt des Probenehmers weist bevorzugt ein Vakuumabdeckelement auf, über das bei Befestigung des Probenehmers die Außenoberfläche des Behältnisses angesaugt wird.*

Das Vakuumabdeckelement besitzt bevorzugt einen Vakuumanschluss, an den ein Unterdruckerzeuger, wie eine Pumpeneinrichtung, anschließbar ist. Das durch den Unterdruckerzeuger erzeugte Vakuum entsteht zwischen der Außenoberfläche und dem Vakuumabdeckelement und sorgt für ein - Faltenbildung verhinderndes - Zusammenziehen der Außenoberfläche und des Befestigungsabschnittes bzw. der Verschließfolie inklusive Klebstoffschicht.

*Das Vakuumabdeckelement des Probenehmers weist bevorzugt einen röhrenförmigen Abschnitt mit einer Öffnung auf, durch die hindurch der Probeaufnahmeraum bestimmungsgemäß geschoben wird, bis das Vakuumabdeckelement mit dem ringförmigen Anschlusselement in Anschlag kommt;*
*das Vakuumabdeckelement definiert bevorzugt eine Ebene, an die, wenn das Vakuumabdeckelement in Anschlag mit dem Anschlusselement ist, der überstehende Abschnitt angezogen wird;*
*in der Öffnung des röhrenförmigen Abschnitts ist bevorzugt ein Dichtmittel vorgesehen, das in Wechselwirkung mit dem Anschlusselement die Öffnung des röhrenförmigen Abschnitts abdichtet.*

*Das Vakuumabdeckelement des Probenehmers beinhaltet bevorzugt eine Öffnung, durch die hindurch der Probeaufnahmeraum bestimmungsgemäß geschoben wird, bis das Vakuumabdeckelement mit dem ringförmigen Anschlusselement in Anschlag kommt, und*
*das Vakuumabdeckelement definiert bevorzugt eine Ebene, an die, wenn das Vakuumabdeckelement in Anschlag mit dem Anschlusselement ist, der überstehende Abschnitt anliegt oder angezogen wird.* Letzteres wird bevorzugt dadurch realisiert, dass in der Ebene rillenförmige Kanäle ausgebildet sind, über die ein Unterdruck durch die Pumpeneinrichtung erzeugbar ist.

*Bevorzugt weist das Vakuumabdeckelement eine rigide, bevorzugt transparente, Röhre auf, die geschlossen ist und in der der Probeaufnahmeraum aufgenommen ist, wenn das Vakuumabdeckelement in Anschlag mit dem Anschlusselement ist, und*
*in der Öffnung des röhrenförmigen Abschnitts (71) ist ein Dichtmittel vorgesehen, beispielsweise ein Dichtungsring, das in Wechselwirkung mit dem Anschlusselement die Öffnung des röhrenförmigen Abschnitts abdichtet.*

*Das Vakuumabdeckelement besitzt bevorzugt eine Verstellungsmöglichkeit, die es ermöglicht, einen der Außenoberfläche zugewandten Hohlraum zu erzeugen, in dem sich die Verschließfolie befindet und der zum Befestigen der Klebeschicht an der Außenoberfläche geschlossen werden kann.*

Im Folgenden wird eine bevorzugte Ausführungsform des erfindungsgemäßen Probenehmers unter Bezug auf die beigefügten Figuren erläutert.
**Fig. 1A bis 1C** zeigen eine perspektivische Ansicht eines Probenehmers gemäß einer ersten Ausführungsform der Erfindung;
**Figur 2** zeigt einen Längsschnitt eines ringförmigen Anschlusselements, eines Probesammlers und eines Griffs des Probenehmers, wobei eine Verschließfolie an dem ringförmigen Anschlusselement vorgesehen ist und eine Folie sich zwischen dem ringförmigen Anschlusselement und dem Griff erstreckt, sodass ein Probeaufnahmeraum gebildet wird;
**Figur 3** zeigt die Verschließfolie und das ringförmige Anschlusselement des erfindungsgemäßen Probenehmers in einer perspektivischen Ansicht;
**Figur 4** zeigt die Verschließfolie des Probenehmers in einer perspektivischen Ansicht;
**Figuren 5** **und** **6** zeigen perspektivische Ansichten eines Vakuumabdeckelements 7 des Probenehmers gemäß der vorliegenden Ausführungsform der Erfindung; und
**Figuren 7** **und** **8** zeigen einen Längsschnitt des zusammengesetzten Probenehmers vor Durchführung einer Probeentnahme.
**Figuren 9A bis 9G** zeigen ein erfindungsgemäßes Verfahren, das bevorzugt mit dem in Figuren 1 bis 8 gezeigten Probenehmer durchgeführt wird.
**Figuren 10A - C** zeigen einen Probenehmer gemäß einer zweiten bevorzugten Ausführungsform der Erfindung, bei dem ein entsprechendes Vakuumabdeckelement entfernt ist.
**Figuren 11A - C** zeigen ein Vakuumabdeckelement des Probenehmers gemäß der zweiten bevorzugten Ausführungsform der Erfindung.
**Figuren 12A - C** zeigen den Probenehmer gemäß der zweiten bevorzugten Ausführungsform der Erfindung in einem zusammengesetzten Zustand, wobei Figuren 12B und 12C ein dem Behältnis zugewandtes Ende des Probenehmer in einer Ausgangsstellung und in einer Befestigungsstellung zeigen.

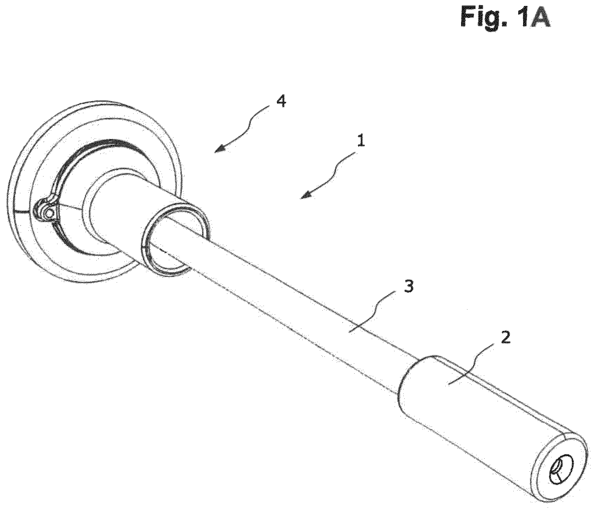

Figuren 1A bis 1B zeigen perspektivische Ansichten eines erfindungsgemäßen Probenehmers , der durch einen Anwender manuell handzuhaben ist.

Der Probenehmer 1 wird bestimmungsgemäß dafür eingesetzt, eine Probe eines Produktes aus einem Behältnis, das beispielsweise ein aus einem Kunststoff, Papier oder Textil gebildeter Sack ist, zu entnehmen. Bei dem Produkt handelt es sich insbesondere um ein fließfähiges Schüttgut, wie beispielsweise ein Granulat oder Pulver. Das Behältnis ist in den Figuren nicht gezeigt.

Der erfindungsgemäße Probenehmer 1 beinhaltet bevorzugt einen Griff 2, den ein Anwender zur Handhabung und Bedienung des Probenehmers 1 mit einer Hand bestimmungsgemäß ergreift.

Ein Probeentnahmeelement 3 erstreckt sich von dem Griff 2 in Richtung eines Befestigungsabschnitts 4 des Probenehmers 1. Das Probeentnahmeelement 3 ist in dieser Ausführungsform ein lanzenförmiger Probesammler. Die Ausführung des Probeentnahmeelementes 3 als lanzenförmiger Probesammler ist lediglich bevorzugt und hierauf nicht beschränkt.

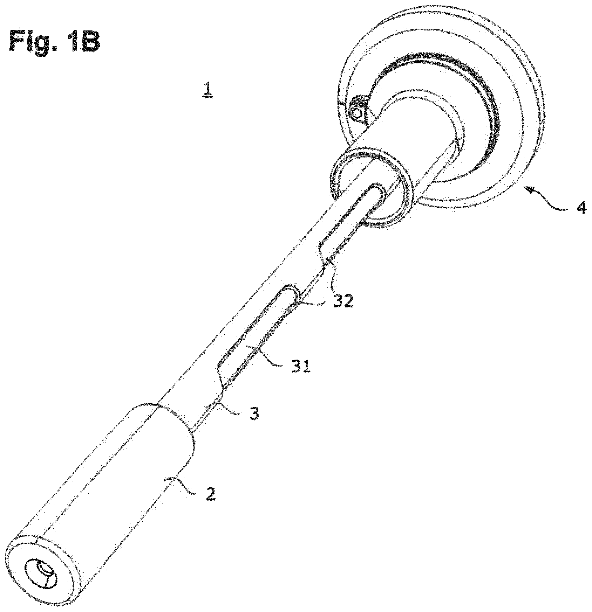

Der lanzenförmige Probesammler 3 weist einen Hohlraum 31 auf bzw. ist hohl ausgeführt, wobei eine Vielzahl von Öffnungen 32 entlang der Längserstreckung des Probesammlers 3 ausgebildet ist, wie es in Figur 1B gezeigt ist. In der konkreten Ausführungsform 2 beinhaltet der lanzenförmige Probesammler 3 zwei Öffnungen 32.

Während der im Folgenden noch näher erläuterten Probeentnahme fällt das Produkt, bei dem es sich beispielsweise um das genannte Schüttgut (Pulver oder Granulat) handelt, durch die Öffnungen 32 hindurch in den Hohlraum 31 des Probesammlers 3.

Des Weiteren beinhaltet der erfindungsgemäße Probenehmer 1 den Befestigungsabschnitt 4, der bei bestimmungsgemäßer Verwendung des Probenehmers 1 an dem nicht gezeigten Behältnis, wie zum Beispiel dem Sack, befestigt wird.

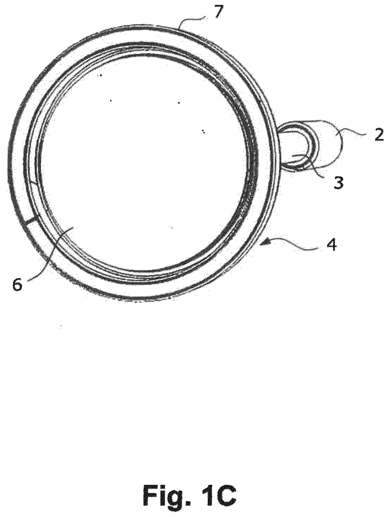

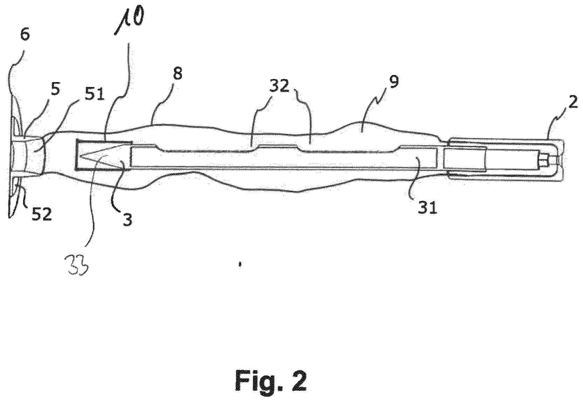

Der Befestigungsabschnitt 4 beinhaltet ein ringförmiges Anschlusselement 5, das in Figur 2 erkennbar ist, eine Verschließfolie 6, die in Figur 1C sichtbar ist, und ein Vakuumabdeckelement 7.

Das ringförmige Anschlusselement 5 ist in Figur 2 zusammen mit dem Probesammler 3 und dem daran befestigten Griff 2 gezeigt. Die Verschließfolie 6 ist an dem ringförmigen Anschlusselement 5 befestigt, worauf weiter unten im Detail noch eingegangen werden wird.

Das ringförmige Anschlusselement 5 definiert einen Durchgang 51, der so dimensioniert ist, dass der Probesammler 3 in den Durchgang 51 in Richtung seiner Achse bzw. Durchgangsachse eingeführt werden kann.

Das ringförmige Anschlusselement 5 umfasst weiterhin auf der bestimmungsgemäß dem Behältnis zugewandten Seite einen Flanschabschnitt 52, der sich in Bezug auf die Durchgangsachse des Durchgangs 51 radial nach außen erstreckt. Der Flanschabschnitt 52 wird bei Befestigung des Probenehmers 1 durch den Anwender an eine nicht gezeigte Außenoberfläche des Behältnis gedrückt und dort befestigt. Hierauf wird im Folgenden ebenfalls noch näher eingegangen. Ein Radius des Flanschabschnitts 52 - in Bezug auf die Durchgangsachse des Durchgangs 51 - ist bevorzugt konstant.

Eine in Figur 2 gezeigte Folie 8 (bzw. ein Folienschlauch 8) erstreckt sich von dem ringförmigen Anschlusselement 5 zu dem Griff 2. Die Folie 8 ist bevorzugt transparent.

Die Folie 8 ist einerseits an dem ringförmigen Anschlusselement 5 auf einer dem Behältnis bestimmungsgemäß abgewandten Seite und andererseits an dem Griff 2 befestigt. Die Folie 8 kann beispielsweise an dem ringförmigen Anschlusselement 5, insbesondere an dem den Durchgang 51 festlegenden Abschnitt festgeklemmt und/oder mit diesem Abschnitt fest verschweißt und/oder verklebt sein.

Gleichermaßen kann die Folie 8 an dem Griff 2 festgeklemmt und/oder mit diesem verschweißt und/oder verklebt sein. Es ist auch möglich, dass die Folie 8 an dem Griff 2 nicht befestigt, sondern hinter dem Griff 8 verschlossen ist, beispielsweise mittelbar durch einen Verschluss oder unmittelbar - es sich ergo bei der Folie 8 um einen Foliensack handelt.

Die Folie 8 bildet zusammen mit dem ringförmigen Anschlusselement 5 einen Probeaufnahmeraum 9 aus, in dem sich der Probesammler 3 befindet. Der Probesammler 3 ist in dieser Ausführungsform in dem Probeaufnahmeraum 9 vollständig eingeschlossen.

Ein dem Anschlusselement 5 zugewandter Endabschnitt 33 des Probesammlers 3 ist spitz und/oder scharf ausgebildet. Diese Ausbildung dient dem im Folgenden noch erläuterten Durchstoßen der Verschließfolie 6 bzw. der Außenoberfläche des Behältnis zur Probeentnahme.

Ein Schutzelement 10 schützt den Endabschnitt 33 des Probesammlers 3. Das Schutzelement 10 ist beispielsweise eine Kappe oder, wie in Figur 2 gezeigt, ein röhrenförmiges/rohrförmiges Element.

Das Schutzelement 10 ist auf den Endabschnitt 33 des Probesammlers 3 aufgesteckt und lässt sich durch den Anwender manuell lösen bzw. verstellen. Beispielsweise kann der Anwender das Schutzelement 10 - mittelbar über die Folie 8 - ergreifen und durch Relativbewegung des Probesammlers 3 mittels des Griffs 2 derart abziehen, dass es sich in dem Probeaufnahmeraum 9 lose befindet und der Endabschnitt 33 des Probesammlers 3 freiliegt.

Besonders bevorzugt ist allerdings, dass das Schutzelement 10 als das röhrenförmige/rohrförmige Element ausgebildet ist. Das Schutzelement 10 ist in diesem Fall bevorzugt derart dimensioniert, dass es entlang der Längserstreckung des Probesammlers 3 gleitend verstellbar ist.

Als Arretierungsmöglichkeit des Schutzelementes 10 in der in Figur 2 gezeigten Position dient beispielsweise ein Bajonettverschluss, der beispielsweise so ausgebildet ist, dass das Schutzelement 10 zuerst gedreht und anschließend in Richtung der Längserstreckung des Probesammlers 3 verstellt werden kann.

Das Schutzelement 10 dient insbesondere dazu, dass der Endabschnitt 33 des Probesammlers 3 weder die Folie 8, die den Probeaufnahmeraum 9 (mit) definiert, noch die Verschließfolie 6 unbeabsichtigt bestätigen kann.

Die bereits genannte Verschließfolie 6 ist an dem ringförmigen Anschlusselement 5 auf einer bestimmungsgemäß dem Behältnis zugewandten Seite befestigt.

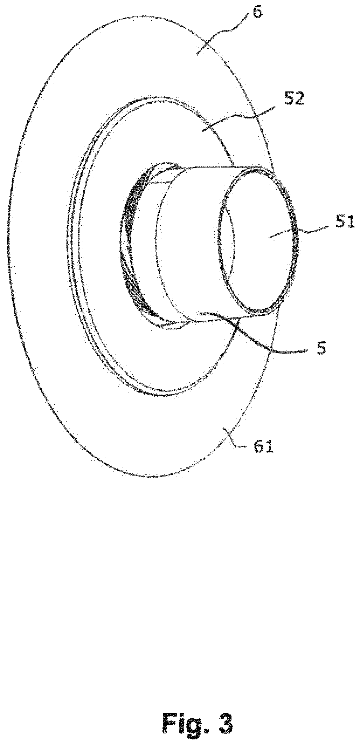

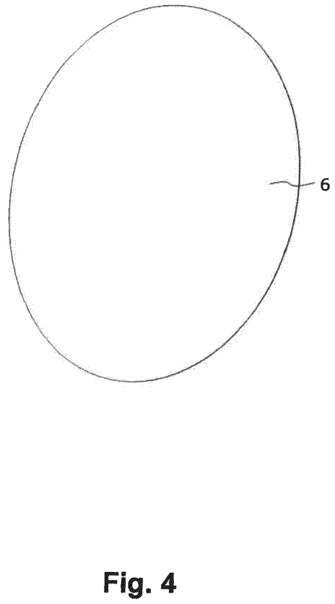

Figuren 3 und 4 zeigen die Verschließfolie 6 in perspektivischen Ansichten.

Die Verschließfolie 6 ist an dem Flanschabschnitt 52 so befestigt, dass sie den Durchgang 51 des ringförmigen Anschlusselements 5 auf der bestimmungsgemäß dem Behältnis zugewandten Seite vollständig überspannt. D. h. auf der dem Behältnis zugewandten Seite ist der Durchgang 51 durch die Verschließfolie 6 vollständig verschlossen.

In Zusammenschau mit Figur 2 ergibt sich hieraus, dass der Probesammler 3 in dem Probeaufnahmeraum 9 vollständig eingeschlossen ist und bereits vor Befestigung des Probenehmers 1 an dem Behältnis mit der Außenumgebung nicht in Kontakt kommen kann, ergo der Probesammler 3 vor einer Kontamination mit in der Außenumgebung vorhandenen Partikeln geschützt ist.

Die Verschließfolie 6 ist beispielsweise mit dem Flanschabschnitt 52 fest verschweißt und/oder verklebt.

Auf der dem Behältnis zugewandten Seite der Verschließfolie 6, die in Figur 4 gezeigt ist, befinden sich folglich keinerlei Elemente. Die Verschließfolie 6 kann deshalb sehr gut in Anlage mit der Außenoberfläche des nicht gezeigten Behältnis gebracht werden.

Die Verschließfolie 6 dient bestimmungsgemäß zur Befestigung des Probenehmers 1 an dem nicht gezeigten Behältnis bzw. auf dessen Außenoberfläche. Hierfür ist auf der dem Behältnis zugewandten Seite der Verschließfolie 6 (Figur 4) eine Klebstoffschicht ausgebildet, die dazu dient, die Verschließfolie 6 auf der Außenoberfläche des Behältnis derart festzukleben, dass die gesamte Verschließfolie 6 auf der Außenoberfläche haftet und der erfindungsgemäße Probenehmer 1 insgesamt auf der Außenoberfläche des Behältnis befestigt ist.

Die Erfindung ist auf keine bestimmte Art von Klebstoff eingeschränkt. Beispielsweise kann es sich bei der Klebstoffschicht um solch eine handeln, die durch eine Schutzfolie geschützt ist, um ein vorzeitiges Aushärten/Austrocknen des Klebstoffes zu verhindern.

Der Anwender zieht die Schutzfolie kurz vor Befestigung des Probenehmers von der Verschließfolie 6 ab und drückt die Verschließfolie anschließend über den Flanschabschnitt 52 an die Außenoberfläche des Behältnis, wo der Klebstoff schnell aushärtet und somit der Probenehmer 1 an dem Behältnis befestigt ist.

Mögliche Klebstoffe sind beispielsweise Haftklebstoffe, wie sie beispielsweise bei Klebebändern zum Einsatz kommen, thermische Klebstoffe, die durch Bestrahlung mittels eines Heizstrahlers aushärten, oder beispielsweise UV Klebstoffe, die durch Bestrahlung mit UV-Licht aushärten.

Die Verschließfolie 6 besitzt eine Dicke in der Größenordnung erhältlicher Klebebänder und ist flächenmäßig, wie in Figuren 3 und 4 gezeigt, größer als der Flanschabschnitt 52 des ringförmigen Anschlusselements 5. Insbesondere besitzt die Verschließfolie 6 einen überstehenden Abschnitt 61, der sich von dem Flanschabschnitt 52 in Bezug auf die Achse des Durchgangs 51 radial nach außen erstreckt.

Der überstehende Abschnitt 61 ist über den gesamten Umfang des Flanschabschnitts 52 ausgebildet. Bevorzugt ist der überstehende Abschnitt 61 über den gesamten Umfang hinweg konstant, d. h. der Abstand des Umfangs der Verschließfolie 6 bzw. des überstehenden Abschnitts 61 zu dem Umfang des Flanschabschnitts 52 ist über den gesamten Umfang hinweg konstant und liegt zwischen 1cm und 5cm.

Der überstehende Abschnitt 61 der Verschließfolie 6 sorgt für eine verbesserte Haftung/Befestigung des Probenehmers an der Außenoberfläche des Behältnis, weil er sich flexibel an Falten und Krümmungen der Außenoberfläche anpasst.

Bevorzugt ist in die Verschließfolie 6 ein maschenartiges Gewebe integriert, das die Verschließfolie 6 verstärkt und für eine sichere/reißfeste Befestigung des gesamten Probenehmers an dem Behältnis sorgt.

Alternativ zu der genannten Verschweißung der Verschließfolie 6 an dem ringförmigen Anschlusselement 5 bzw. dessen Flanschabschnitt 52 ist es ebenfalls möglich, die Verschließfolie 6 durch eine Klemmung an dem ringförmigen Anschlusselement 5 zu befestigen. Hierfür beinhaltet das ringförmige Anschlusselement 5 in dem Flanschabschnitt 52 eine Vielzahl von Durchgängen, in die entsprechende Schrauben eingesetzt werden.

Die Schrauben durchlaufen bzw. durchstoßen die Verschließfolie 6 an entsprechenden Stellen und greifen auf der dem Behältnis zugewandten Seite in entsprechende Gewinde ein, die beispielsweise in einer die Verschließfolie 6 an den Flanschabschnitt 52 drückenden Gegenplatte gebildet sind. Die Gewinde können beispielsweise durch in die Gegenplatte versenkte Muttern ausgebildet sein. Alternativ zu der Schraubverbindung kann die Gegenplatte durch einen lösbaren Formschluss, beispielsweise in Form einer hintergreifenden Verrastung, die durch eine mittelbare oder unmittelbare manuelle Verformung wieder lösbar ist, an dem Flanschabschnitt 52 befestigt sein, sodass die Verschließfolie festgeklemmt ist.

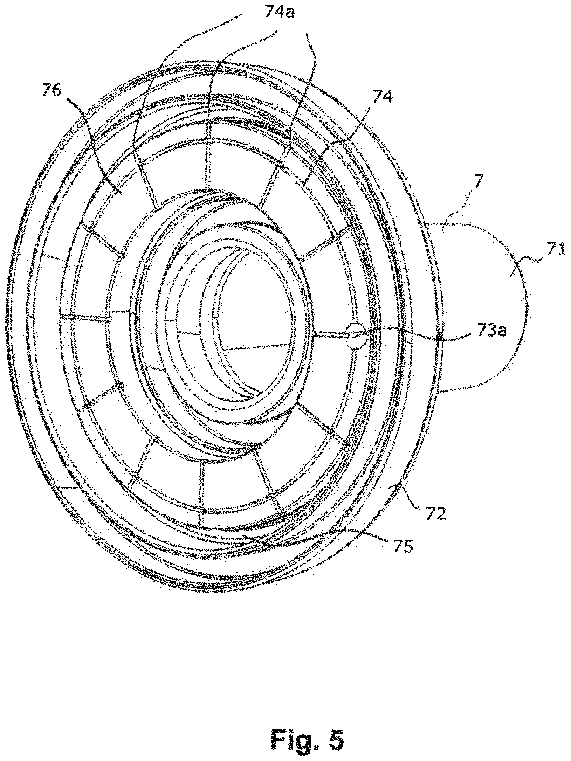

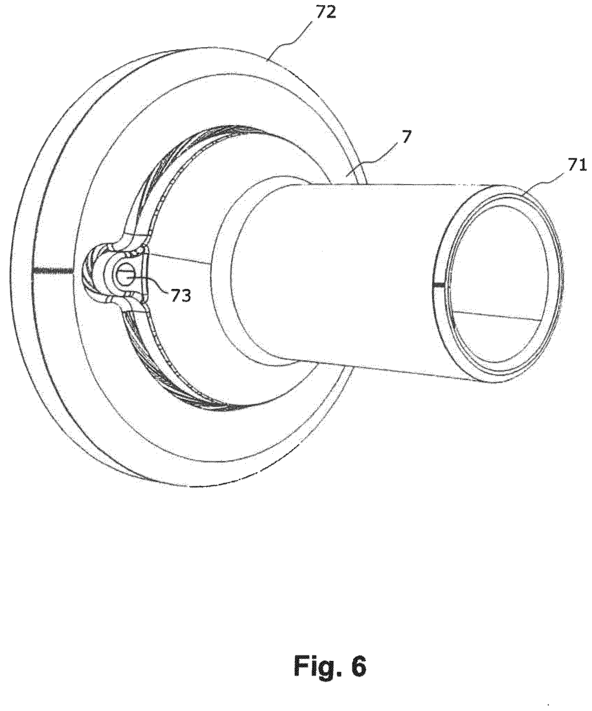

Der in Figuren 1A bis 1C gezeigte Befestigungsabschnitt 4 beinhaltet bevorzugt das bereits genannte Vakuumabdeckelement 7. Dieses Element ist in den Figuren 5 und 6 in perspektivischen Ansichten vergrößert dargestellt.

Das Vakuumabdeckelement 7 beinhaltet einen röhrenförmigen Abschnitt 71 und einen vergrößerten Flanschabschnitt 72, der sich an den röhrenförmigen Abschnitt 71 anschließt und radial erstreckt. Eine in dem röhrenförmigen Abschnitt 71 gebildete Öffnung durchläuft das Vakuumabdeckelement 7 vollständig, wie es aus Figuren 5 und 6 ersichtlich wird.

Das Vakuumabdeckelement 7 wird bestimmungsgemäß vor Befestigung des Probenehmers 1 über den Probeaufnahmeraum 9 geschoben, d. h. die Seite des Probesammlers 3, auf der der Griff 2 gebildet ist, wird von der in Figur 5 gezeigten Seite aus in die Öffnung eingeführt und hindurchgeschoben bis das Vakuumabdeckelement 7 mit dem ringförmigen Anschlusselement 5 in Anschlag kommt.

Hierdurch wird die Folie 8, die den Probeaufnahmeraum 9 definiert, zusammen mit dem darin eingeschlossenen Probesammler 3 durch die Öffnung des Vakuumabdeckelements 7 hindurchgeführt.

Der vergrößerte Flanschabschnitt 72 besitzt einen Vakuumanschluss 73, an den eine nicht gezeigte Vakuumleitung bzw. eine Unterdruckerzeugungseinheit angeschlossen werden kann.

Der Vakuumanschluss 73 durchläuft den vergrößerten Flanschabschnitt 72 vollständig. Figur 5 zeigt einen Mündungsbereich 73a des Vakuumanschlusses auf der dem Behältnis zugewandten Seite. Auf dieser Seite steht der Vakuumanschluss an dem Mündungsbereich 73a in Kommunikation mit einem die Achse der Öffnung des Vakuumabdeckelements 7 vollständig umlaufenden, rillenförmigen Kanal 74.

Der rillenförmige Kanal 74 wird in bestimmten Abständen von jeweils radial zu der Achse der Öffnung verlaufenden weiteren rillenförmigen Kanälen 74a gekreuzt, die jeweils in eine Vertiefung 75 münden, die ebenfalls die genannte Achse umläuft und tiefer ausgebildet ist als eine Ebene 76, in der der rillenförmige Kanal und die entsprechenden radial verlaufenden Kanäle 74a ausgebildet sind.

Die Ebene 76 dient zur Halterung des überstehenden Abschnitts 61 der Verschließfolie 6 und ist bevorzugt mit dem überstehenden Abschnitt 61 der Verschließfolie 6 größenmäßig identisch.

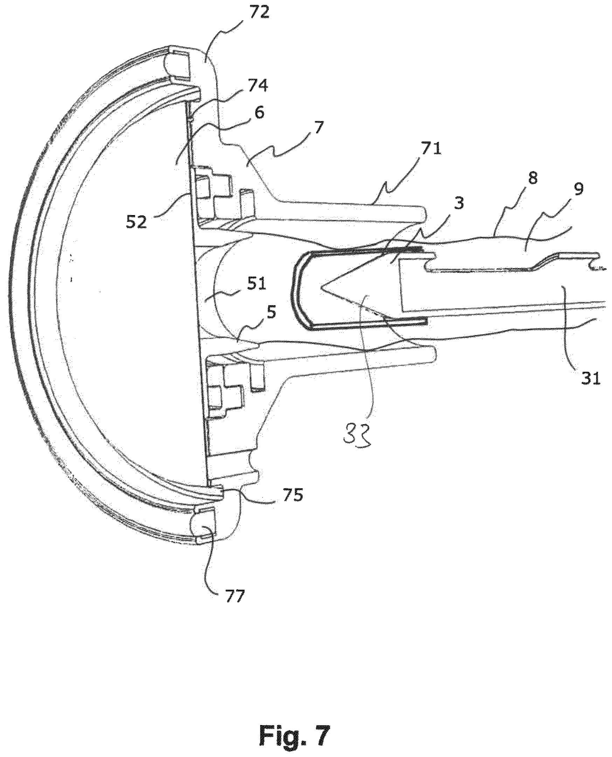

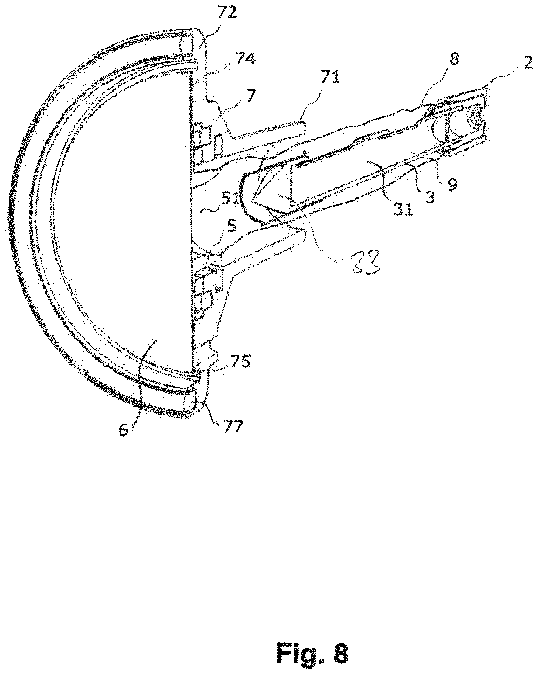

Figuren 7 und 8 zeigen den erfindungsgemäßen Probenehmer 1 gemäß der vorliegenden Ausführungsform in einem zusammengesetzten Zustand und in einem Längsschnitt entlang der Achse des Durchgangs 51 des ringförmigen Anschlusselementes 5 bzw. der Achse der Öffnung des Vakuumabdeckelements 7, wobei beide Achsen koaxial ausgerichtet sind.

Der Probesammler 3 ist in dem zusammengesetzten Zustand in dem Probeaufnahmeraum 9 vollständig eingeschlossen, wobei das röhrenförmige Schutzelement 10, bevorzugt arretiert, an dem der Verschließfolie 6 zugewandten Endabschnitt des Probesammlers 3 angeordnet ist und diesen derart schützt/abdeckt, dass keine ungewollte Beschädigung der Folie 8 oder der Verschließfolie 6 stattfinden kann.

Die den Probeaufnahmeraum 9 festlegende Folie 8 ist, wie bereits im Vorhergehenden erläutert wurde, einerseits an dem ringförmigen Anschlusselement 5 und andererseits an dem Griff 2 befestigt.

Das Vakuumabdeckelement 7 ist vollständig an das ringförmige Anschlusselement 5 herangeschoben, sodass die Folie 8 die Öffnung des Vakuumabdeckelements 7 durchläuft.

Das Vakuumabdeckelement 7 greift mit dem ringförmigen Anschlusselement 5 ineinander, bevorzugt über einen Adapterring, wobei in diesem Zustand die Verschließfolie 6 bzw. der überstehende Abschnitt 61 der Verschließfolie 6 an der Ebene 76, in der die rillenförmigen Kanäle gebildet sind, anliegt.

Bevorzugt kann das Vakuumabdeckelement 7 auf der dem Behältnis zugewandten Seite bevorzugt noch eine Dichtlippe 77 aufweisen, die über den gesamten Umfang der in Figuren 7 und 8 gezeigten Seite hinweg ausgebildet ist.

Der Probenehmer ist in dem in Figuren 7 und 8 gezeigten Zustand fertig für eine Probeentnahme.

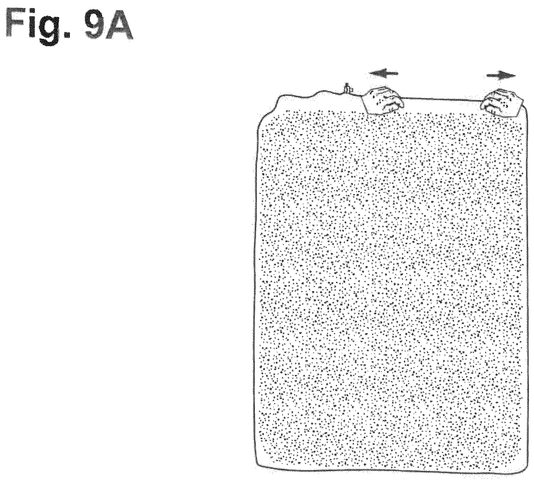

Das entsprechende Verfahren wird im Folgenden unter Bezug auf die Figuren 9A bis 9F erläutert.

### Schritt 1 (Figur 9A)

Der Anwender bringt das Behältnis, aus dem eine Probe zu entnehmen ist, in eine gewünschte Position. Die Außenoberfläche des Behältnis wird manuell glattgezogen, sodass eine gut zugängliche Stelle für die Probeentnahme entsteht.

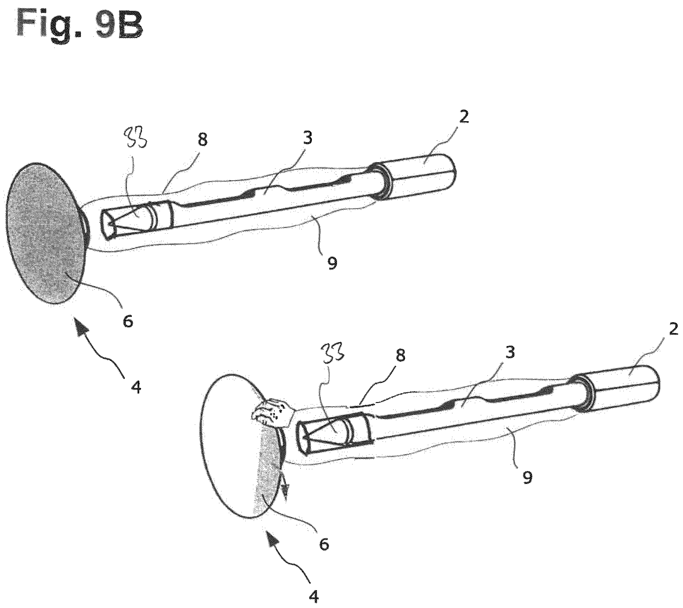

### Schritt 2 (Figur 9B)

Anschließend entfernt der Anwender eine Schutzfolie von der Verschließfolie 6, die auf der dem Behältnis zugewandten Seite der Verschließfolie 6 vorhanden ist. Das Schutzelement 10 schützt den der Verschließfolie 6 zugewandten Endabschnitt des Probesammlers 3 und ist bevorzugt arretiert. Es besteht deshalb keine Gefahr, dass der spitz und/oder scharf ausgebildete Endabschnitt 33 die Folie 8 oder die Verschließfolie 6 ungewollt beschädigt.

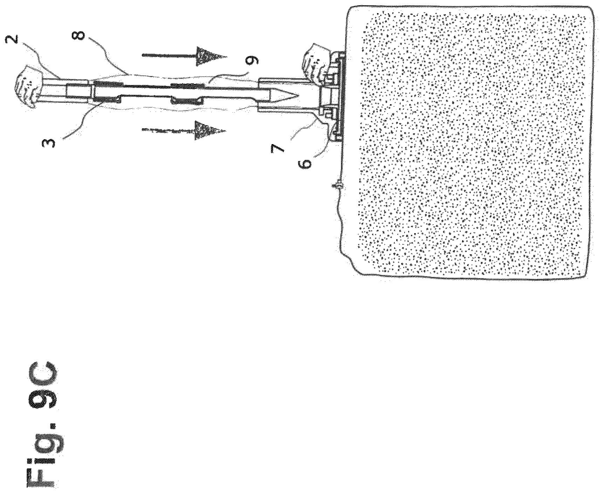

### Schritt 3 (Figur 9C)

Der Anwender führt anschließend das optionale bzw. bevorzugte Vakuumabdeckelement 7 an die Außenoberfläche des Behältnis und drückt, mittelbar über das Vakuumabdeckelement 7, die klebende Seite der Verschließfolie 6 an die Außenoberfläche des Behältnis.

Vor/Zu diesem Zeitpunkt kann die Vakuumerzeugungseinrichtung, die in Figuren 7, 8 und 9 nicht gezeigt ist, bereits arbeiten, wodurch der überstehende Abschnitt 61 der Verschließfolie 6 an die Ebene 76 angezogen und hierdurch eine Faltenbildung oder ein Knicken des überstehenden Abschnittes 61 der Verschließfolie 6 vor/bei dem Andrücken an die Außenoberfläche des Behältnis verhindert wird.

Wenn der Anwender das Vakuumabdeckelement 7 an die Außenoberfläche des Behältnis drückt, erzeugt die Vakuumerzeugungseinrichtung in der Vertiefung 75, die die Verschließfolie 6 umläuft, einen Unterdruck und sorgt für ein Ansaugen/Anziehen der Außenoberfläche des Behältnis. Hierdurch wird ein kraftvolles Anziehen der Außenoberfläche an die klebende Seite der Verschließfolie 6 bewirkt sowie eine Faltenbildung minimiert, weil Abschnitte des Behältnis in die Vertiefung 75 gezogen werden und somit eine faltenfreie Außenoberfläche, an der die klebende Seite der Verschließfolie haftet, entsteht.

Der Probenehmer 1 ist in dem erreichten Zustand auf der Außenoberfläche des Behältnis befestigt bzw. mit dieser stabil verbunden. Die Vakuumabdeckung 7 kann nunmehr entfernt werden oder an dem Ort verbleiben.

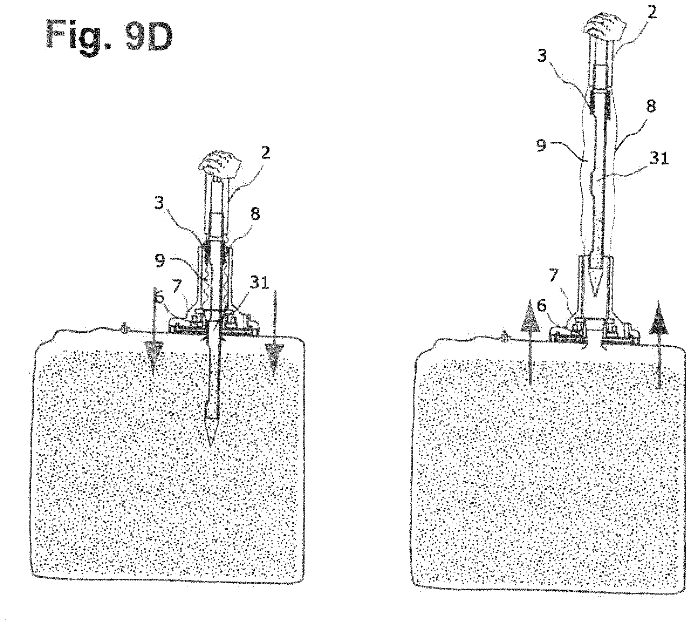

### Schritt 4 (Figur 9D)

Der Anwender greift - mittelbar über die Folie 8 - nunmehr mit einer Hand das Schutzelement 10 und verstellt es durch relatives Bewegen des Probesammlers 3 mit der anderen Hand bis es die in Fig. 9C gezeigte obere Position erreicht. Der spitze und/oder scharfe Endabschnitt 33 des Probesammlers 3 liegt nunmehr frei.

Der Anwender nimmt jetzt den Griff 2 und durchstößt mit der in Figuren 7 und 8 gezeigten spitzen Seite bzw. dem Endabschnitt 33 des Probesammlers 3 die den Durchgang überspannende Verschließfolie 6 sowie die Außenoberfläche des Behältnis.

Wenn der Griff 2 maximal an das Vakuumabdeckelement 7 herangeführt ist, befinden sich der Probesammler 3 sowie seine entsprechenden Öffnungen 32 innerhalb des Behältnis, wodurch das Produkt in den Hohlraum 31 des Probesammlers 3 fallen kann.

Anschließend zieht der Anwender den Probesammlers 3 über den Griff 2 wieder aus dem Behältnis zurück. Die Probe des Produktes befindet sich nunmehr zusammen mit dem Probesammler 3 innerhalb des Probeaufnahmeraums 9.

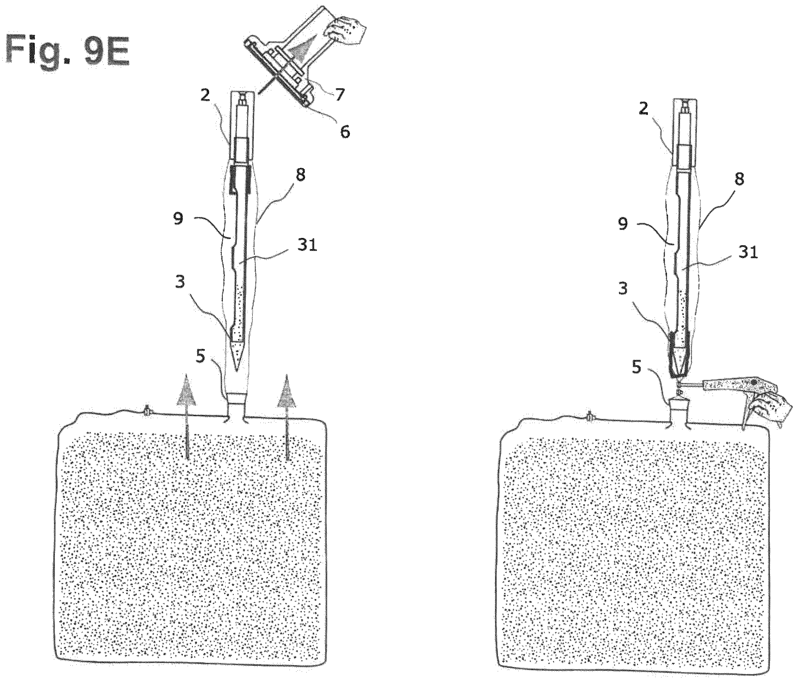

### Schritt 5 (Figur 9E)

Der Anwender versetzt das Schutzelement 10 zurück in seine Ausgangsposition und entfernt das Vakuumabdeckelement 7, wodurch die Folie 8 vollständig zugänglich wird. Der Anwender schnürt die Folie 8 in einem Bereich zwischen dem Probesammler 3 und dem ringförmigen Anschlusselement 5 zusammen und verschließt die Folie an dieser Stelle. Das kann beispielsweise durch ein Verschweißgerät oder durch zwei handelsübliche Kabelbinder geschehen.

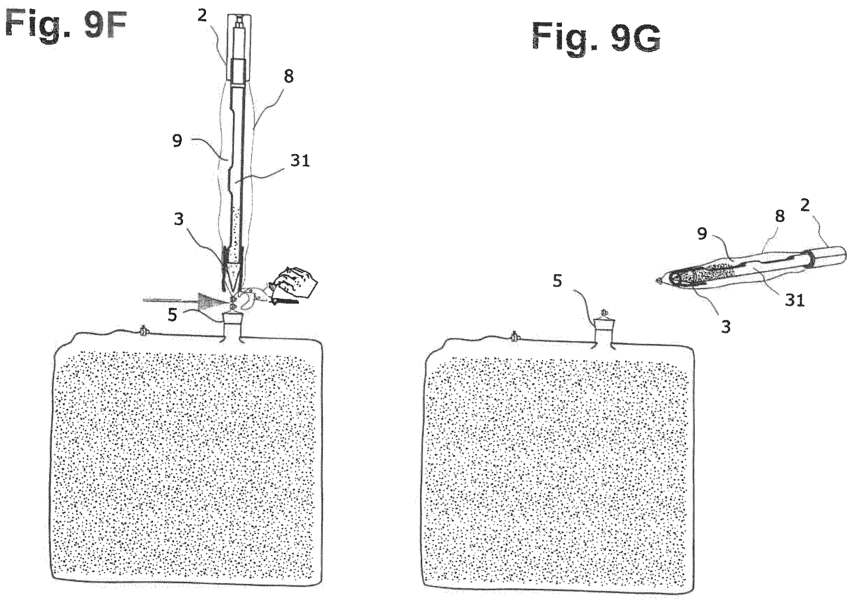

### Schritt 6 (Figuren 9F und 9G)

Final durchtrennt der Anwender die Folie 8 in dem verschlossenen Bereich, derart, dass ein Rest der Folie 8 verschlossen an dem ringförmigen Anschlusselement 5 verbleibt und ein weiterer Rest der Folie 8 den Probesammler 3 zusammen mit der entnommenen Probe einschließt. Beispielsweise durchtrennt der Anwender die Folie 8 zwischen den zwei zusammengezogenen Kabelbindern oder die erzeugte Verschweißung der Folie 8, derart, dass beide Seiten verschlossen/verschweißt bleiben.

Das Schutzelement 10 deckt den Endabschnitt 33 ab und verhindert, dass die verschlossene Folie 8 ungewollt beschädigt wird.

Es ist ersichtlich, dass die für die Probeentnahme notwendige Beschädigung des Behältnis zuverlässig verschlossen bleibt und eine Kontamination durch in der Außenumgebung vorhandene Partikel nicht stattfinden kann.

Außerdem ist die entnommene Probe ebenfalls eingeschlossen und kann nicht kontaminiert werden.

Ergo ist eine kontaminationsfreie Probeentnahme möglich.

Zu erwähnen ist zudem, dass die Verschließfolie 6 in dem Bereich, in dem sie den Durchgang 51 des ringförmigen Anschlusselements 5 überspannt, mit der Außenoberfläche des Behältnis durch die Klebstoffschicht bereits verbunden ist, bevor der Anwender diesen Bereich und die Außenoberfläche mit dem Probesammler durchstößt.

Die Verklebung des den Durchgang überspannenden Bereichs der Verschließfolie 6 mit der Außenoberfläche des Behältnis sorgt dafür, dass Verunreinigungen, die sich auf der Außenoberfläche des Behältnis befinden, bei der Probeentnahme nicht in das Behältnis eindringen können, weil sie durch die Verklebung eingeschlossen sind.

Insoweit führt diese Verklebung zu einer äußerst kontaminationsarmen Probeentnahme, wobei gleichzeitig ein sicherer Verschluss nach der Probeentnahme an dem Behältnis verbleibt.

Zudem verhindert das Schutzelement 10 eine ungewollte Beschädigung der Folie 8 und/oder der Verschließfolie 6.

Für weniger kritische Fälle ist es nicht notwendig, dass die Verschließfolie 6 den Durchgang des ringförmigen Anschlusselements überspannt, d. h. vor Befestigung des Probenehmers 1 kann der Probeaufnahmeraum 9 über den Durchgang in dem ringförmigen Abschlusselement 5 offen sein.

Die Dimensionen des erläuterten Probenehmers 1 sind so gewählt, dass der Anwender alle Verfahrensschritt mit der Hand ausführen kann. Der Griff 2 und das Vakuumabdeckelement 7 sind jeweils so dimensioniert, dass der Anwender sie jeweils in einer Hand halten kann.

Die einzelnen Elemente des Probenehmers 1 können aus einem Kunststoff oder Metall gebildet sein.

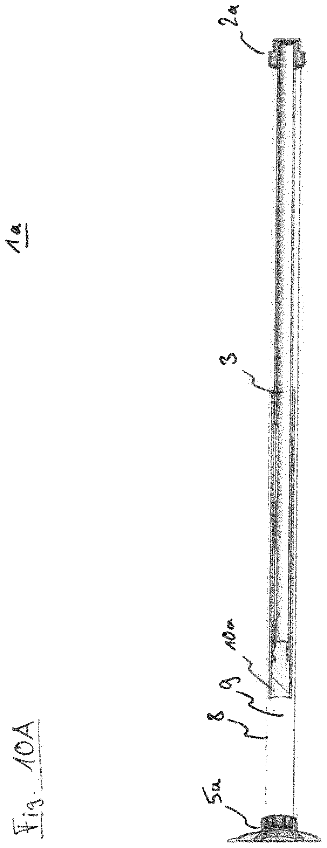

Im Folgenden wird eine zweite Ausführungsform des erfindungsgemäßen Probenehmers unter Bezug auf Figuren 10A-C, 11A-C und 12A-C erläutert, wobei Merkmale des Probenehmers 1a gemäß der zweiten bevorzugten Ausführungsform, die mit denen der ersten identisch sind, nicht nochmals erläutert werden.

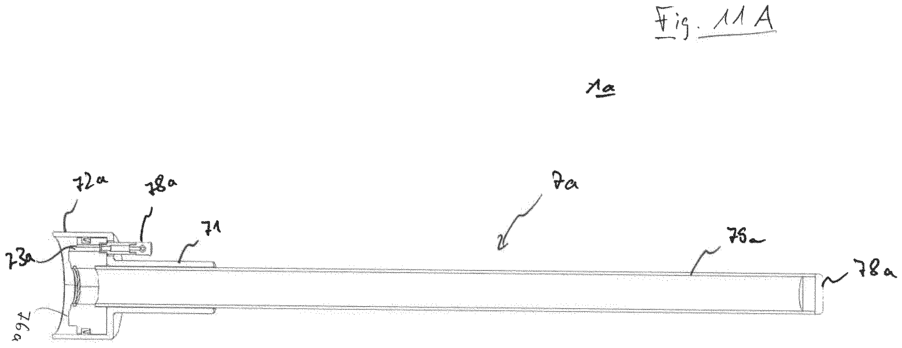

Figuren 10A-C zeigen den erfindungsgemäßen Probenehmer 1a gemäß der zweiten bevorzugten Ausführungsform in einem Zustand, in dem ein entsprechendes Vakuumabdeckelement 7a entfernt ist. Das Vakuumabdeckelement 7a des Probenehmers 1a gemäß der zweiten bevorzugten Ausführungsform wird im Folgenden noch unter Bezug auf Figuren 11A-C erläutert werden.

Figuren 10A-C zeigen den Grundzustand vor einer Probeentnahme, in dem der lanzenförmige Probesammler 3 in der Folie 8 bzw. dem Probeaufnahmeraum 9 vollständig eingeschlossen ist.

Ein ringförmiges Anschlusselement 5a des Probenehmers 1a gemäß der zweiten bevorzugten Ausführungsform ist geringfügig anders aufgebaut als das der ersten bevorzugten Ausführungsform.

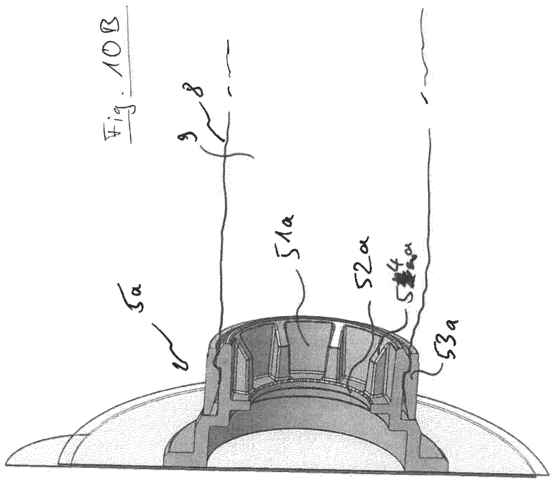

Figur 10A zeigt den Probenehmer 1a in einem Längsschnitt, wobei das Anschlusselement 5a in Figur 10B vergrößert dargestellt ist. Das Anschlusselement 5a besitzt innerhalb des Durchgangs 51a einen stufenförmigen, radialen Vorsprung 52a, der den Durchgang 51a radial verengt und Führungsrippen 54a aufweist, die wiederum in Richtung der Längserstreckung des Probenehmers verlaufen. Die Führungsrippen 54a sind bevorzugt über den gesamten Umfang der Öffnung 51a hinweg verteilt.

Der Vorsprung 52a inklusive der Führungsrippen 54a wechselwirkt mit dem Schutzelement 10a, was im Folgenden noch näher erläutert werden wird.

Darüber hinaus unterscheidet sich das Anschlusselement 5a von dem der ersten Ausführungsform dadurch, dass die den Probeaufnahmeraum 9 festlegende Folie 8 mit dem Anschlusselement 5a nicht verschweißt, sondern an ihm festgeklemmt ist. Dies erfolgt durch einen Klemmring 53a, der mit einer Vertiefung des Anschlusselementes 5a derart ineinandergreift, dass er die Folie 8 festgeklemmt. Der entsprechende Aufbau ist in dem Schnitt gemäß Figur 10B ersichtlich.

Auch das Schutzelement 10a ist gegenüber der ersten bevorzugten Ausführungsform unterschiedlich aufgebaut. Es ist zwar auch röhrenförmig/rohrförmig ausgebildet und sitzt gleitend gelagert auf dem lanzenförmigen Probesammler 3, allerdings unterscheidet es sich in seiner entsprechenden Größe in der Längserstreckung.

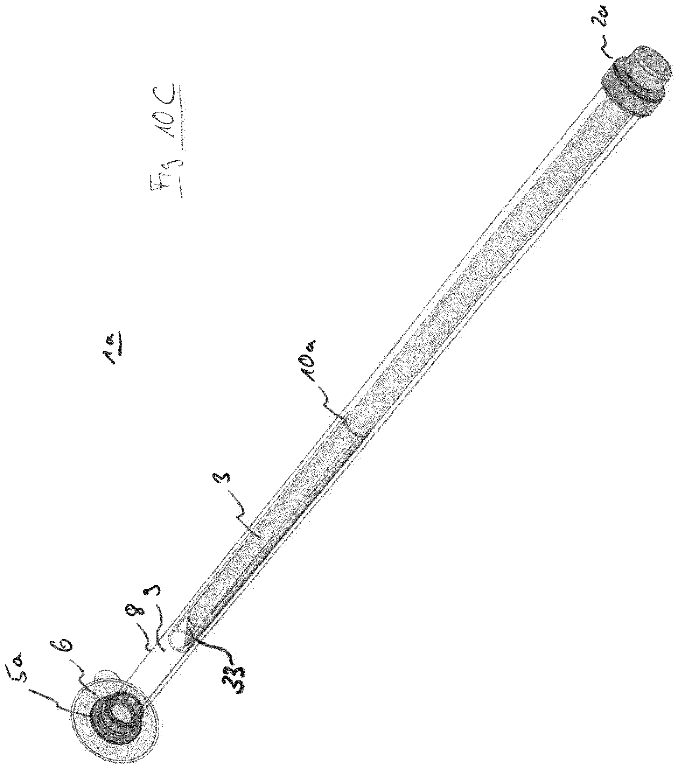

Das Schutzelement 10a erstreckt sich, wie es in Figuren 10A und C gezeigt ist, größenmäßig soweit in Richtung der Längserstreckung des Probesammlers 3, dass es beide Öffnungen 32 abdeckt. Diese Ausgestaltung hat den Vorteil, dass das Schutzelement 10a die Öffnungen 32 nach der Probeentnahme wieder abdeckt und somit verhindert, dass die genommene Probe aus dem Hohlraum 31 des lanzenförmigen Probesammlers 3 innerhalb des Probeaufnahmeraums 9 wieder herausfallen kann.

Das Schutzelement 10a kann durch einen Bajonettverschluss in der in Figuren 10A und C gezeigten Position arretiert sein.

Ferner unterscheidet sich der Griff 2a des Probenehmers 1a der zweiten Ausführungsform. Der Griff 2a besitzt bevorzugt ein (Au-βen)gewinde, auf das ein einen Durchgang verschließender Schraubdeckel gedreht ist. Der in dem Griff 2a gebildete und in den Figuren nicht sichtbare Durchgang dient dazu, dass der Anwender die genommene Probe nach Entfernen des Schraubdeckels aus dem Probeaufnahmeraum 9 entnehmen kann.

Hierauf wird im Folgenden noch näher eingegangen.

Figur 11A-C zeigen das Vakuumabdeckelement 7a des Probenehmers 1a gemäß der zweiten bevorzugten Ausführungsform der Erfindung.

Der Aufbau des Vakuumabdeckelements 7a unterscheidet sich von dem der ersten bevorzugten Ausführungsform dadurch, dass sich an den röhrenförmigen/rohrförmigen Abschnitt 71 eine transparente und materialmäßig rigide Röhre 79a anschließt, die auf der dem Behältnis abgewandten Seite beispielsweise mit einer hinteren Abdeckung 78a verschlossen ist.

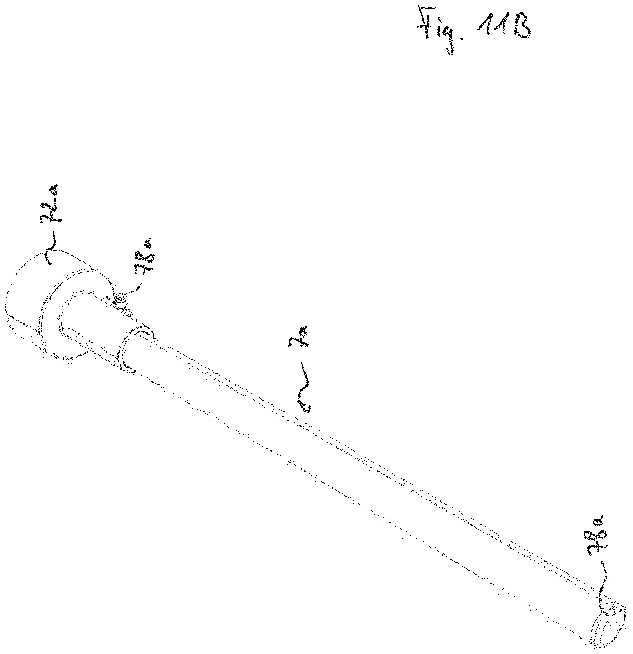

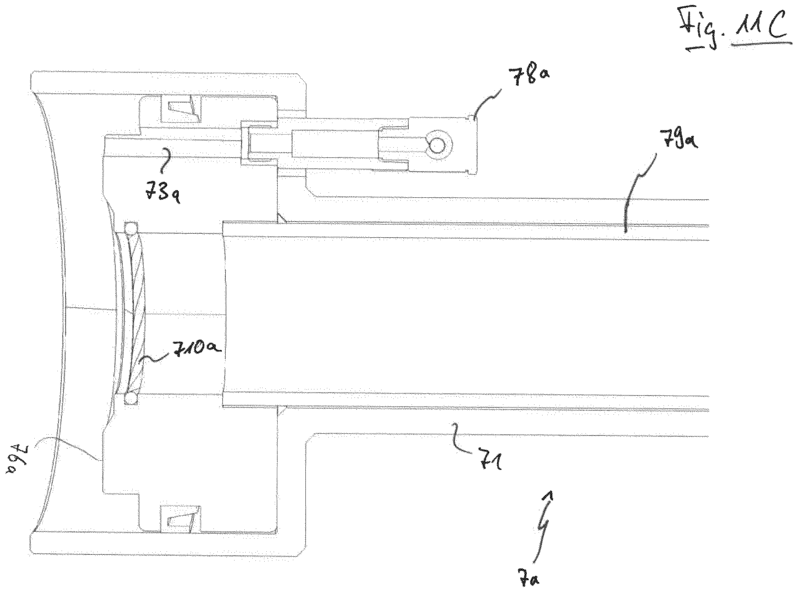

Zudem befindet sich auf der Innenseite der Öffnung des röhrenförmigen Durchgangs 71 ein Dichtmittel 710a, das beispielsweise ein Dichtring ist. Der Dichtring 710a kommt mit einer radialen Außenseite des ringförmigen Anschlusselements 5a in Kontakt, wenn der Anwender beim Zusammensetzen der Elemente aus Figuren 10 und 11 den Griff 2a und den Probeaufnahmeraum 9 in die Röhre 79a schiebt und final das Anschlusselement 5a in die Öffnung des Vakuumabdeckelements drückt.

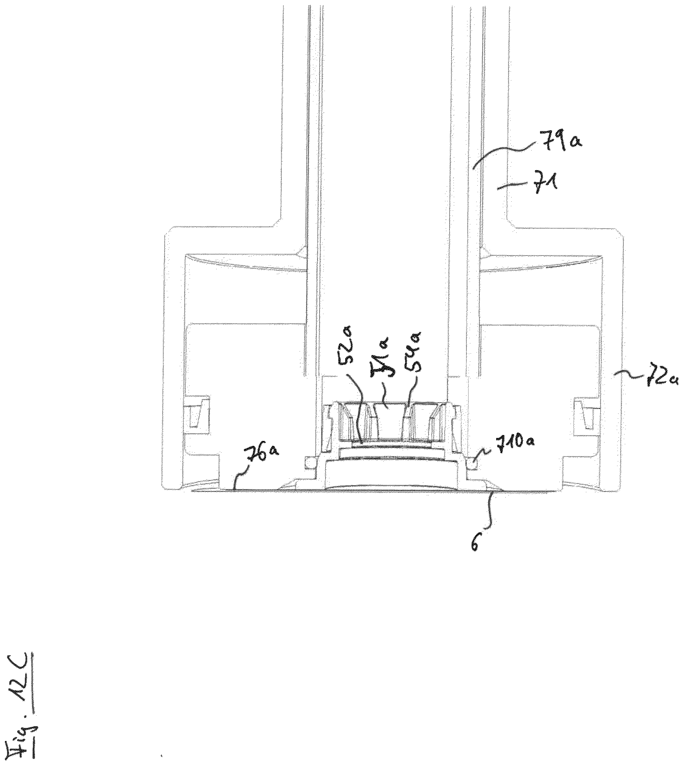

Besonders bevorzugt besitzt das Vakuumabdeckelement 7a eine Verstellungsmöglichkeit zwischen einer in Figuren 11A und 11 C gezeigten Grundstellung und einer im Folgenden noch unter Bezug auf Figur 12C erläuterten Befestigungsstellung.

Hierfür ist die rigide Röhre 79a in dem röhrenförmigen Abschnitt 71 gleitend gelagert, derart, dass in der in Figur 11A gezeigten Grundstellung in dem radial vergrößerten Flanschabschnitt 72a ein dem Behältnis zugewandter Hohlraum entsteht.

Um das Vakuumabdeckelement 7a in die Befestigungsposition zu bringen, was im Folgenden noch erläutert werden wird, verschiebt der Anwender die rigide Röhre 79a relativ zu dem röhrenförmigen Abschnitt 71 bis der Hohlraum geschlossen ist (Figur 12C). Mit Verstellung zwischen Grundstellung und Befestigungsstellung verschiebt sich die Ebene 76a des Vakuumabdeckelements 7a, an der bestimmungsgemäß der überstehende Abschnitt der Verschließfolie anliegt, in Richtung des Behältnisses.

Ein Anschlusselement 78a für den Unterdruckerzeuger bzw. die Pumpeneinrichtung ist auf der dem Behältnis abgewandten Seite des Vakuumabdeckelements 7a an dem Vakuumanschluss, der auf der Ebene 76 an dem Mündungsbereich 73a endet, derart befestigt, dass es sich bei Verstellen zwischen Grund- und Befestigungsstellung relativ zu dem vergrößerten Flanschabschnitt 72a durch einen entsprechenden Durchgang hindurch versetzt.

Die Ebene 76a des Vakuumabdeckelements 7a kann den unter Bezug auf die erste bevorzugte Ausführungsform beschriebenen, rillenförmigen Kanal 74 und die weiteren, kreuzenden Kanäle 74a aufweisen, wobei der oder die Kanäle in Kommunikation mit dem Mündungsbereich 73a stehen. Alternativ kann die Ebene 76a auch völlig glatt ausgebildet sein.

Das Verfahren zur Probeentnahme, das mit dem Probenehmer 1a gemäß der zweiten bevorzugten Ausführungsform durchgeführt wird, unterscheidet sich in folgenden Aspekten von dem unter Bezug auf Figur 9 beschriebenen Verfahren.

Anfänglich setzt der Anwender die Elemente des Probenehmers 1a, die unter Bezug auf Figuren 10 und 11 beschrieben wurden, zusammen. Der Anwender führt diesbezüglich den Griff 2a in die in Figuren 11A und 11C auf der linken Seite gezeigte Öffnung des Vakuumabdeckelements 7a ein und schiebt den Probesammler bzw. den gesamten Probeaufnahmeraum 9 soweit in die transparente Röhre 79a bis der Griff 2a in Anschlag mit der Abdeckung 78a kommt.

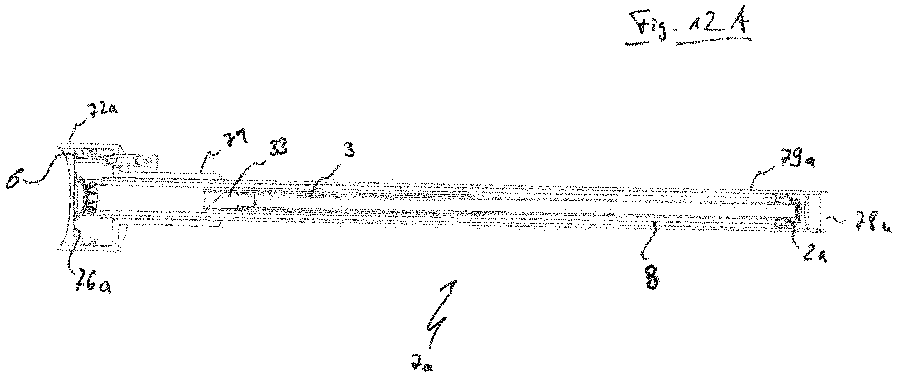

Zudem drückt der Anwender das Anschlusselement 5a in die Öffnung des Vakuumabdeckelementes 7a, wodurch der radiale Außenumfang des ringförmigen Anschlusselements 5a mit dem Dichtring 710a in Kontakt kommt und durch den Dichtring 710a dichtend gehalten wird. Dieser Zustand ist in Figur 12A vergrößert gezeigt. Die Dichtwirkung zwischen Dichtring 710a und dem ringförmigen Anschlusselement 5a hat die Wirkung, dass das bei Befestigung an dem Behältnis durch den Unterdruckerzeuger in dem erweiterten Flanschabschnitt 72a erzeugte Vakuum nicht in der rigiden Röhre 79a aufbaut. Der Anwender bewegt bei dem Zusammensetzen die rigide Röhre 79a relativ zu dem röhrenförmigen Abschnitt 71 derart, dass der Hohlraum in dem erweiterten Flanschabschnitt 72a vorhanden ist (Figur 12A).

Der Anwender kann jetzt den gesamten, zusammengesetzten Probenehmer 1a problemlos handhaben, indem er die rigide Röhre 79a greift, wobei keine Gefahr besteht, dass der Anwender die Folie 8 durch unsachgemäße Handhabung beschädigt. Insoweit fungiert die transparente Röhre 79a zum Schutz der Folie 8 und macht insgesamt die Handhabung des Probenehmers 1a leichter.

Anschließend aktiviert der Anwender den nicht gezeigten Unterdruckerzeuger, was dazu führt, dass - sofern die Kanäle in der Ebene 76a gebildet sind - der überstehende Abschnitt 61 der Verschließfolie 6 an die Ebene 76a angezogen wird.

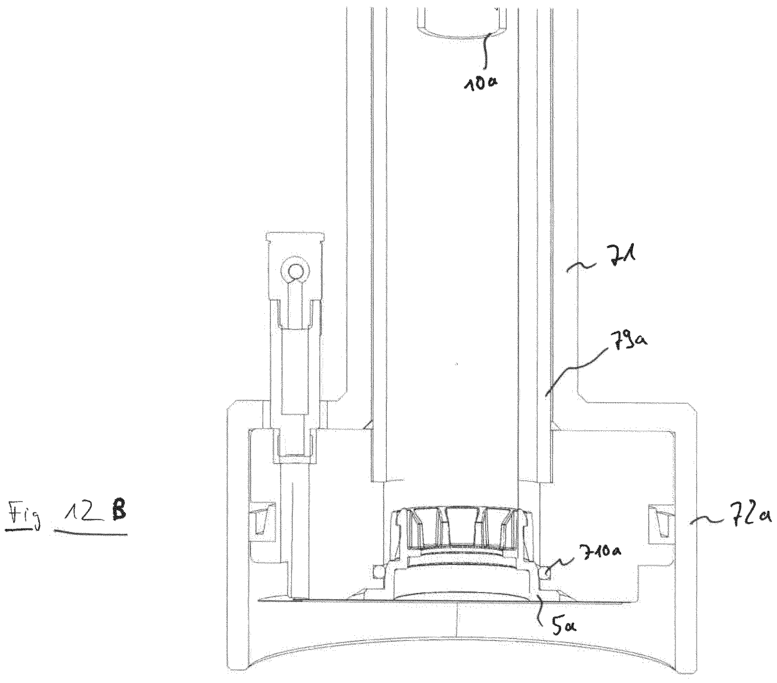

Der Anwender entfernt nunmehr, wie in Figur 9B gezeigt, die Schutzfolie der Verschließfolie 6, wodurch die Klebeschicht freiliegt und führt den vergrößerten Flanschabschnitt 72a an die Außenoberfläche des Behältnisses heran. Der Probenehmer befindet sich in der Grundstellung, die in Figuren 12 A und 12 B gezeigt ist. Wenn der vergrößerte Flanschabschnitt 72a mit der Außenoberfläche des Behältnisses abschließt, baut sich in dem Hohlraum ein Vakuum auf, dass die Außenoberfläche des Behältnisses in Richtung der Klebeschicht zieht und damit Falten aus der Außenoberfläche entfernt.

Der Anwender bewegt dann die rigide Röhre 79a relativ zu dem röhrenförmigen Abschnitt 71 in Richtung Behältnis, wodurch der Probenehmer 1a in die Befestigungsstellung, wie sie in Figur 12 C vergrößert dargestellt ist, übergeht. Während dieser Bewegung kommt die Klebeschicht sukzessive mit der glatten, durch das Vakuum kuppelförmig angezogenen Außenoberfläche des Behältnisses in Kontakt und verbindet sich mit dieser. Der Anwender drückt die Klebeschicht in der letztendlich erreichten Befestigungsstellung (Figur 12 C in Verbindung mit Figur 9 C) nochmals bevorzugt fest.

Der Dichtring 710a sorgt bei den erläuterten Schritten dafür, dass in dem Innenraum der transparenten Röhre 79a kein Unterdruck entsteht.

Der Anwender löst und entfernt jetzt das Vakuumabdeckelement 7a insgesamt. Der Anwender muss bei dieser bevorzugten Ausführungsform des Probenehmers 1a das Schutzelement 10a nicht gesondert verstellen, wie es unter Bezug auf Figur 9B erläutert wurde, sondern löst lediglich die Arretierung.

Der Anwender ergreift jetzt den Griff 2a und führt den Endabschnitt 33 des Probesammlers 3 inklusive des Schutzelements 10a in den Durchgang des Anschlusselements 5a. Das Schutzelement 10a besitzt solche Abmessungen, dass es sich innerhalb des Durchgangs des Anschlusselements 5a an dem stufenförmigen Vorsprung 52a abstützt und durch die Führungsrippen 54a zentriert wird.

Bei weiterem Schieben des Probesammlers 3 in Richtung des Behältnisses versetzt sich das Schutzelement 10a gleitend auf dem Probesammler 3, wobei der Endabschnitt 33 des Probesammlers 3 die Verschließfolie 6 und die Außenoberfläche des Behältnisses durchstößt (analog zu Fig. 9D).

Der Anwender schiebt den Probesammler 3 soweit in das Behältnis, dass zumindest eine der Öffnungen 32 sich in dem Produkt befindet und die Probe in den Hohlraum 31 des Probesammlers 3 fällt. Bevorzugt schiebt der Anwender den Probesammler 3 soweit in das Behältnis/Produkt, dass sich beide Öffnungen 32 in dem Produkt befinden.

Anschließend zieht der Anwender den Probesammler 3 zurück in den Probeaufnahmeraum 9, wobei das Schutzelement 10a ortsfest bleibt und sich durch die Relativbewegung entlang der Längserstreckung des Probesammlers 3 versetzt. Der Anwender kann das Schutzelement 10a zur Unterstützung hierbei mittelbar über den unteren Teil der Folie 8 halten.

Das Schutzelement 10a wird auf dem Probesammler 3 soweit versetzt/verstellt, dass es den Endabschnitt 33 wieder abdeckt und beide Öffnungen 32 verschließt, wenn sich der Probesammler 3 wieder vollständig innerhalb des Probeaufnahmeraums 9 befindet.

Die sich anschließenden Verfahrensschritte sind mit denen der Figur 9E (rechte Abbildung) identisch und werden nicht nochmals erläutert.

## Patentansprüche

1. Probenehmer (1) für eine Entnahme einer Probe eines Produktes aus einem flexiblen Behältnis, aufweisend:
einen Befestigungsabschnitt (4), der bestimmungsgemäß auf einer Außenoberfläche des Behältnisses befestigt wird und einen Durchgang (51) definiert;
einen Probeaufnahmeraum (9), der zumindest nach Befestigung des Befestigungsabschnittes (4) an dem Behältnis gegenüber einer Au-βenumgebung verschlossen ist und in dem ein Probeentnahmeelement (3) aufgenommen ist, wobei
der Probenehmer (1) derart ausgebildet ist, dass nach Befestigung des Befestigungsabschnittes (4) an dem Behältnis das Probeentnahmeelement (3) durch den Durchgang (51) hindurch geführt werden kann, sodass ein der Außenoberfläche zugewandter Endabschnitt (33) des Probeentnahmeelementes (3) die Außenoberfläche des Behältnisses zur Entnahme der Probe durchstößt;
ein Schutzelement (10), das den Endabschnitt (33) des Probeentnahmeelements (3) zumindest teilweise abdeckt, um eine ungewollte Beschädigung der Außenoberfläche und/oder des Probenehmers (1) zu verhindern, wobei das Schutzelement (10) an dem Probeentnahmeelement (3) derart verstellbar und/oder von diesem lösbar ist, dass der Endabschnitt (33) für das Durchstoßen der Außenoberfläche freiliegt;
**dadurch gekennzeichnet, dass**
der Probeaufnahmeraum (9) durch eine flexible Folie gebildet ist, die einerseits an dem Befestigungsabschnitt (4) befestigt ist und andererseits mittelbar oder unmittelbar verschlossen ist, und
die flexible Folie, nachdem der Befestigungsabschnitt (4) an der Außenoberfläche des Behältnisses befestigt ist, das Lösen/Verstellen des Schutzelementes (10) für das Führen des Probeentnahmeelementes (3) durch den Durchgang (51) hindurch und das Durchstoßen der Außenoberfläche zulässt.

2. Probenehmer (1) nach Anspruch 1, wobei
die flexible Folie das Lösen/Verstellen des Schutzelementes (10) zulässt, indem ein Anwender das Schutzelement (10) mittelbar über die flexible Folie greift und das Probeentnahmeelement (3) relativ zu dem Schutzelement (10) bewegt.

3. Probenehmer (1) nach Anspruch 1 oder 2, wobei
der Befestigungsabschnitt (4) ein ringförmiges den Durchgang (51) definierendes Anschlusselement (5) aufweist, das so ausgebildet ist, dass, wenn das Probeentnahmeelement (3) durch den Durchgang (51) hindurch geführt wird, das Schutzelement (10) sich an dem Anschlusselement (5) derart abstützt, dass es sich durch das Führen des Probeentnahmeelementes (3) löst/verstellt.

4. Probenehmer (1) nach Anspruch 3, wobei
das Probeentnahmeelement (3) ein lanzenförmiger Probesammler ist, der zur Entnahme der Probe bestimmungsgemäß in Richtung seiner Längserstreckung durch den Durchgang (51) hindurch geführt wird, und
das Schutzelement (10) an dem lanzenförmigen Probesammler (3) derart vorgesehen ist, dass es sich an dem Anschlusselement (5) abstützt und in der Längsrichtung gleitend verstellt, wenn der Probesammler durch den Durchgang (51) hindurch geführt wird.

5. Probenehmer (1) nach einem der vorhergehenden Ansprüche, wobei
das Probeentnahmeelement (3) ein lanzenförmiger Probesammler ist, der zur Entnahme der Probe bestimmungsgemäß in Richtung seiner Längserstreckung durch den Durchgang (51) hindurch geführt wird und in dem mindestens eine Öffnung quer zu der Längserstreckung gebildet ist, durch die hindurch die Probe nach Durchstoßen der Außenoberfläche fällt und sich in einem Hohlraum (31) des Probesammlers (3) sammelt, und
das Schutzelement (10) an dem lanzenförmigen Probesammler derart vorgesehen ist, dass es mit oder nach Zurückziehen des Probesammlers in den Probeaufnahmeraum (9) die Öffnung verschließt.

6. Probenehmer (1) gemäß einem der Ansprüche 1 bis 5, wobei der Durchgang (51) durch eine Verschließfolie (6) verschlossen ist, derart, dass das Probeentnahmeelement (3) bereits vor dem Befestigen des Befestigungsabschnittes (4) an dem Behältnis in dem Probeaufnahmeraum (9) vollständig eingeschlossen ist, und das Probeentnahmeelement (3) bei der Probeentnahme derart geführt wird, dass es die Verschließfolie (6) und die Außenoberfläche des Behältnisses durchstößt.

7. Probenehmer (1) gemäß Anspruch 6, wobei das ringförmige den Durchgang (51) definierende Anschlusselement (5) einen der Außenoberfläche zugewandten Flanschabschnitt (52) aufweist, und die Verschließfolie (6) an dem Flanschabschnitt (52) derart befestigt ist, dass sie den Durchgang (51) überspannt, und
die Verschließfolie (6) in Bezug auf eine Achse des Durchgangs (51) mit einem überstehenden Abschnitt (61) radial nach außen über den Flanschabschnitt (52) übersteht und eine Klebstoffschicht zumindest auf einer der Außenoberfläche zugewandten Seite des überstehenden Abschnitts (61) gebildet ist, derart, dass nach Befestigung des Befestigungsabschnittes (4) der überstehende Abschnitt (61) zumindest an der Außenoberfläche haftet.

8. Probenehmer (1) gemäß Anspruch 7, wobei der Befestigungsabschnitt (4) ein Vakuumabdeckelement (7) aufweist, über das bei Befestigung des Probenehmers (1) die Außenoberfläche des Behältnisses angesaugt wird.

9. Probenehmer (1) nach Anspruch 8, wobei
das Vakuumabdeckelement (7) eine Öffnung aufweist, durch die hindurch der Probeaufnahmeraum (9) bestimmungsgemäß geschoben wird, bis das Vakuumabdeckelement (7) mit dem ringförmigen Anschlusselement (5) in Anschlag kommt, und
das Vakuumabdeckelement (7) eine Ebene definiert, an die, wenn das Vakuumabdeckelement (7) in Anschlag mit dem Anschlusselement (5) ist, der überstehende Abschnitt (61) anliegt oder angezogen wird.

10. Probenehmer nach Anspruch 9, wobei
das Vakuumabdeckelement (7) eine rigide, bevorzugt transparente, Röhre (79a) aufweist, die geschlossen ist und in der der Probeaufnahmeraum (9) aufgenommen ist, wenn das Vakuumabdeckelement (7) in Anschlag mit dem Anschlusselement (5) ist, und
in der Öffnung des röhrenförmigen Abschnitts (71) ein Dichtmittel (710a) vorgesehen ist, das in Wechselwirkung mit dem Anschlusselement (5) die Öffnung des röhrenförmigen Abschnitts (71) abdichtet.

11. Probenehmer (1) nach Anspruch 9 oder 10, wobei das Vakuumabdeckelement (7) eine Verstellungsmöglichkeit aufweist, die es ermöglicht, einen der Außenoberfläche zugewandten Hohlraum zu erzeugen, in dem sich die Verschließfolie (6) befindet und der zum Befestigen der Klebeschicht an der Außenoberfläche geschlossen werden kann.

## Claims

1. Sampling device (1) for taking a sample of a product from a flexible container, comprising:
an attachment portion (4) which is intended to be attached to an outer surface of the container and defines a passage (51);
a sample collection chamber (9) which is closed off from an external environment at least after the attachment portion (4) has been attached to the container and in which a sample collection element (3) is accommodated, wherein
the sampling device (1) is configured such that, after attachment the attachment portion (4) to the container, the sample collection element (3) can be passed through the passage (51) so that an end portion (33) of the sample collection element (3) facing the outer surface pierces the outer surface of the container to collect the sample;
a protective element (10) which at least partially covers the end portion (33) of the sample collection element (3) in order to prevent unintentional damage to the outer surface and/or the sampling device (1), the protective element (10) being adjustable on and/or detachable from the sample collection element (3) in such a way that the end portion (33) is exposed for piercing the outer surface; **characterized in that**
the sample collection chamber (9) is formed by a flexible foil, which on the one hand is attached to the attachment portion (4) and on the other hand is directly or indirectly closed off, and
the flexible foil, after the attachment portion (4) is attached to the outer surface of the container, allows the protective element (10) to be released/adjusted for guiding the sample collection element (3) through the passage (51) and piercing the outer surface.

2. Sampling device (1) according to claim 1, wherein
the flexible foil allows the protective element (10) to be released/adjusted by a user gripping the protective element (10) indirectly via the flexible foil and moving the sample collection element (3) relative to the protective element (10).

3. Sampling device (1) according to claim 1 or 2, wherein
the attachment portion (4) comprises a ring-shaped connecting element (5) which defines the passage (51) and is configured such that, when the sample collection element (3) is guided through the passage (51), the protective element (10) is supported on the connecting element (5) in such a way that it is released/adjusted by the guidance of the sample collection element (3).

4. Sampling device (1) according to claim 3, wherein
the sample collection element (3) is a lance-shaped sample collector, which is guided through the passage (51) in the direction of its longitudinal extension as intended in order to collect the sample, and
the protective element (10) is provided on the lance-shaped sample collector (3) in such a way that it is supported on the connecting element (5) and is adjusted in a sliding manner in the longitudinal direction when the sample collector is guided through the passage (51).

5. Sampling device (1) according to any one of the preceding claims, wherein
the sample collection element (3) is a lance-shaped sample collector, which is guided through the passage (51) in the direction of its longitudinal extension in accordance with the intended use for the purpose of collecting the sample and in which at least one opening is formed transversely to the longitudinal extension, through which opening the sample enters after piercing the outer surface and collects in a cavity (31) of the sample collector (3), and
the protective element (10) is provided on the lance-shaped sample collector in such a way that it closes the opening when or after the sample collector is withdrawn into the sample collection chamber (9).

6. Sampling device (1) according to any one of claims 1 to 5, wherein the passage (51) is closed off by a sealing film (6) in such a way that the sample collection element (3) is already completely enclosed in the sample collection chamber (9) before the attachment portion (4) is attached to the container, and the sample collection element (3) is guided during sampling in such a way that it pierces the sealing film (6) and the outer surface of the container.

7. Sampling device (1) according to claim 6, wherein the ring-shaped connecting element (5) defining the passage (51) comprises a flange portion (52) facing the outer surface, and the sealing film (6) is attached to the flange portion (52) in such a way that it spans the passage (51), and
the sealing film (6) projects radially outwards with respect to an axis of the passage (51) with a projecting portion (61) over the flange portion (52) and an adhesive layer is formed at least on a side of the projecting portion (61) facing the outer surface, such that after attaching the attachment portion (4) the projecting portion (61) adheres at least to the outer surface.

8. Sampling device (1) according to claim 7, wherein the attachment portion (4) comprises a vacuum cover element (7), via which the outer surface of the container is sucked in when the sampling device (1) is attached.

9. Sampling device (1) according to claim 8, wherein
the vacuum cover element (7) has an opening through which the sample collection chamber (9) is pushed as intended until the vacuum cover element (7) comes into abutment with the ring-shaped connecting element (5), and
the vacuum cover element (7) defines a plane against which, when the vacuum cover element (7) is in abutment with the connecting element (5), the projecting portion (61) abuts or is attracted.

10. Sampling device according to claim 9, wherein
the vacuum cover element (7) comprises a rigid, preferably transparent, tube (79a) which is closed and in which the sample collection chamber (9) is received when the vacuum cover element (7) is in abutment with the connecting element (5), and
a sealing means (710a) is provided in the opening of the tubular portion (71), which seals the opening of the tubular portion (71) in interaction with the connecting element (5).

11. Sampling device (1) according to claim 9 or 10, wherein the vacuum cover element (7) has an adjustment facility which makes it possible to create a cavity facing the outer surface, in which the sealing film (6) is located and which can be closed to secure the adhesive layer to the outer surface.

## Revendications

1. Dispositif d'échantillonnage (1) pour un prélèvement d'un échantillon d'un produit d'un récipient flexible, présentant :
une section de fixation (4) qui est fixée selon les dispositions sur une surface extérieure du récipient et définit un passage (51) ;
un espace de réception d'échantillons (9) qui est fermé au moins après la fixation de la section de fixation (4) au récipient par rapport à un environnement extérieur et dans lequel un élément de prélèvement d'échantillon (3) est reçu, dans lequel
le dispositif d'échantillonnage (1) est réalisé de telle manière qu'après la fixation de la section de fixation (4) au récipient, l'élément de prélèvement d'échantillon (3) puisse être guidé à travers le passage (51) de sorte qu'une section d'extrémité (33) tournée vers la surface extérieure de l'élément de prélèvement d'échantillon (3) transperce la surface extérieure du récipient pour le prélèvement de l'échantillon ;
un élément de protection (10) qui recouvre au moins partiellement la section d'extrémité (33) de l'élément de prélèvement d'échantillon (3) afin d'empêcher un endommagement involontaire de la surface extérieure et/ou du dispositif d'échantillonnage (1), dans lequel l'élément de protection (10) est réglable au niveau de l'élément d'échantillonnage (3) et/ou détachable de celui-ci de telle manière que la section d'extrémité (33) soit dégagée pour le transpercement de la surface extérieure ;
**caractérisé en ce que**
l'espace de réception d'échantillon (9) est formé par un film flexible qui est fixé d'une part à la section de fixation (4) et est fermé d'autre part directement ou indirectement, et
le film flexible, après que la section de fixation (4) est fixée à la surface extérieure du récipient, autorise le détachement/le réglage de l'élément de protection (10) pour le guidage de l'élément de prélèvement d'échantillon (3) à travers le passage (51) et le transpercement de la surface extérieure.

2. Dispositif d'échantillonnage (1) selon la revendication 1, dans lequel
le film flexible autorise le détachement/le réglage de l'élément de protection (10) en ce qu'un utilisateur saisit l'élément de protection (10) indirectement par le biais du film flexible et déplace l'élément de prélèvement d'échantillon (3) par rapport à l'élément de protection (10).

3. Dispositif d'échantillonnage (1) selon la revendication 1 ou 2, dans lequel
la section de fixation (4) présente un élément de raccordement (5) annulaire définissant le passage (51) qui est réalisé de sorte que lorsque l'élément de prélèvement d'échantillon (3) est guidé à travers le passage (51), l'élément de protection (10) s'appuie contre l'élément de raccordement (5) de telle manière qu'il se détache/règle par le guidage de l'élément de prélèvement d'échantillon (3).

4. Dispositif d'échantillonnage (1) selon la revendication 3, dans lequel
l'élément de prélèvement d'échantillon (3) est un collecteur d'échantillon en forme de lance qui est guidé pour le prélèvement de l'échantillon selon les dispositions en direction de son étendue longitudinale à travers le passage (51), et
l'élément de protection (10) est prévu au niveau du collecteur d'échantillon (3) en forme de lance de telle manière qu'il s'appuie contre l'élément de raccordement (5) et se règle de manière glissante dans le sens longitudinal lorsque le collecteur d'échantillon est guidé à travers le passage (51).

5. Dispositif d'échantillonnage (1) selon l'une quelconque des revendications précédentes, dans lequel
l'élément de prélèvement d'échantillon (3) est un collecteur d'échantillon en forme de lance qui est guidé pour le prélèvement de l'échantillon selon les dispositions en direction de son étendue longitudinale à travers le passage (51) et est formé dans l'au moins une ouverture transversalement à l'étendue longitudinale, à travers laquelle l'échantillon tombe après transpercement de la surface extérieure et se collecte dans un espace creux (31) du collecteur d'échantillon (3), et
l'élément de protection (10) est prévu au niveau du collecteur d'échantillon en forme de lance de telle manière qu'il ferme l'ouverture avec ou après le retrait du collecteur d'échantillon dans l'espace de réception d'échantillon (9).

6. Dispositif d'échantillonnage (1) selon l'une quelconque des revendications 1 à 5, dans lequel le passage (51) est fermé par un film de fermeture (6) de telle manière que l'élément de prélèvement d'échantillon (3) soit déjà complètement inclus avant la fixation de la section de fixation (4) au récipient dans l'espace de prélèvement d'échantillon (9), et l'élément de prélèvement d'échantillon (3) est guidé lors du prélèvement d'échantillon de telle manière qu'il transperce le film de fermeture (6) et la surface extérieure du récipient.

7. Dispositif d'échantillonnage (1) selon la revendication 6, dans lequel l'élément de raccordement (5) annulaire définissant le passage (51) présente une section de bride (52) tournée vers la surface extérieure, et le film de fermeture (6) est fixé à la section de bride (52) de telle manière qu'il enjambe le passage (51), et
le film de fermeture (6) dépasse par rapport à un axe du passage (51) avec une section (61) qui dépasse radialement vers l'extérieur de la section de bride (52) et une couche de colle est formée au moins sur un côté tourné vers la surface extérieure de la section (61) qui dépasse de telle manière qu'après la fixation de la section de fixation (4), la section (61) qui dépasse colle au moins à la surface extérieure.

8. Dispositif d'échantillonnage (1) selon la revendication 7, dans lequel la section de fixation (4) présente un élément de recouvrement de vide (7), par le biais duquel lors de la fixation du dispositif d'échantillonnage (1), la surface extérieure du récipient est aspirée.

9. Dispositif d'échantillonnage (1) selon la revendication 8, dans lequel
l'élément de recouvrement de vide (7) présente une ouverture, à travers laquelle l'espace de réception d'échantillon (9) est poussé selon les dispositions jusqu'à ce que l'élément de recouvrement de vide (7) vienne en butée avec l'élément de raccordement (5) annulaire, et
l'élément de recouvrement de vide (7) définit un plan, contre lequel, lorsque l'élément de recouvrement de vide (7) est en butée avec l'élément de raccordement (5), la section (61) qui dépasse repose ou est serrée.

10. Dispositif d'échantillonnage selon la revendication 9, dans lequel
l'élément de recouvrement de vide (7) présente un tuyau (79a) rigide, de préférence transparent qui est fermé et dans lequel l'espace de réception d'échantillon (9) est reçu lorsque l'élément de recouvrement de vide (7) est en butée avec l'élément de raccordement (5), et
un moyen étanche (710a) est prévu dans l'ouverture de la section (71) en forme de tuyau, lequel rend étanche en interaction avec l'élément de raccordement (5) l'ouverture de la section (71) en forme de tuyau.

11. Dispositif d'échantillonnage (1) selon la revendication 9 ou 10, dans lequel
l'élément de recouvrement de vide (7) présente une possibilité de réglage qui lui permet de générer un espace creux tourné vers la surface extérieure, dans lequel le film de fermeture (6) se trouve et qui peut être fermé pour la fixation de la couche de colle à la surface extérieure.
